# FASCICULE DE BREVET EUROPEEN

(11) **EP 2 795 645 B1**
(45) Date de publication et mention de la délivrance du brevet: **15.02.2017**
(21) Numéro de dépôt: 12810269.6
(22) Date de dépôt: 20.12.2012
(51) Int. Cl.: H01H 9/54

(54) **DISPOSITIF DISJONCTEUR MÉCATRONIQUE ET PROCÉDÉ DE DÉCLENCHEMENT ASSOCIÉ ET APPLICATION À LA COUPURE DE COURANT CONTINU ÉLEVÉ**
MECHATRONISCHE SCHUTZSCHALTVORRICHTUNG UND VERFAHREN ZUR AUSLÖSUNG UND VERWENDUNG FÜR UNTEBRECHUNG DES HOCHGLEICHSTROMS
MECHATRONIC CIRCUIT BREAKER DEVICE AND METHOD FOR TRIGGERING AND APPLICATION FOR CUTOFF OF HIGH DIRECT CURRENT

(30) Priorité: 23.12.2011 FR 1162413
(43) Date de publication de la demande: 29.10.2014
(73) Titulaire: General Electric Technology GmbH, 5400 Baden (CH)
(72) Inventeur: DUPRAZ, Jean-Pierre, 01360 Bressolles (FR); GRIESHABER, Wolfgang, 69006 Lyon (FR); COLLET, Michel, 69003 Lyon (FR)
(74) Mandataire: Brevalex
(86) Numéro de dépôt international: PCT/EP2012/076399
(87) Numéro de publication internationale: WO 2013/092873

(56) Documents cités:
- WO-A1-2011/057675
- DE-A1- 3 416 914

## Description

### DOMAINE TECHNIQUE

L'invention concerne un nouveau dispositif disjoncteur mécatronique et son procédé de déclenchement associé.

L'application principale visée par l'invention est la coupure de courant continu d'intensité élevée dans une ligne de transmission et/ou distribution, aux niveaux de tensions typiquement supérieurs à 50kVCC, jusqu'à 800kVCC et au delà. Le domaine concerné par le courant continu sous tension élevée est aussi communément désigné sous le sigle HVDC, pour High Voltage Direct Current en anglais).

L'invention peut aussi s'appliquer à la coupure de courants continus sous des tensions de valeur moindre, typiquement dans la gamme de 1kVCC à 50kVCC ou encore à la coupure de courants alternatifs.

### ART ANTÉRIEUR

La coupure des courants dans les réseaux de transmission et/ou distribution de courant continu sous tension élevée (HDVC) est devenue un enjeu crucial car leur maitrise conditionne directement le développement desdits réseaux.

A ce jour, il semble se dégager un consensus parmi l'ensemble des acteurs des réseaux dans l'approche à avoir pour réaliser une telle coupure : il est nécessaire, pour couper réellement les courants en un temps inférieur à quelques millisecondes, de réaliser un dispositif formant un disjoncteur mécatronique en associant au moins une cellule de coupure à élément semi-conducteur en parallèle électrique avec un absorbeur d'énergie et avec en parallèle électrique au moins un interrupteur-sectionneur mécanique capable d'une part de faire passer le courant permanent dans sa position de fermeture avec des pertes d'insertion minimes et donc d'éviter les pertes importantes dans l'(les) élément(s) semi-conducteur de coupure et d'autre part de tenir la tension de rétablissement aux bornes du dispositif dans sa position d'ouverture.

On peut citer ici la demande de brevet EP1538645 qui a initiée ce principe de réalisation de disjoncteur mécatronique. Bien qu'idéalement adaptable à la coupure de courants continus élevés avec des thyristors IGCT en tant qu'éléments semi-conducteurs de coupure, il apparaît que l'interrupteur mécanique de type Thomson présenté en figure 5A, n'a pu réellement être mis en oeuvre. En outre, à la lecture de ce document, il ne ressort pas vraiment si et comment il est possible de réaliser la coupure des courants continus à des niveaux de tensions très élevés, typiquement supérieurs à 50kVCC. Par ailleurs, le mode de blocage automatique des thyristors dans la branche auxiliaire suppose que le temps de pleine ouverture de l'interrupteur mécanique soit plus court que la demi-période propre du circuit oscillant utilisé pour la commutation de la branche principale vers la branche auxiliaire. Cette dépendance est préjudiciable, car les critères de choix de la fréquence propre de ce circuit oscillant peuvent conduire à des fréquences propres trop élevées au regard des technologies accessibles pour la réalisation de l'interrupteur mécanique. De plus, cette demande de brevet EP1538645 suppose qu'il est possible de créer une oscillation du courant primaire lui-même, oscillation telle que celui-ci s'annule, condition nécessaire à l'auto-blocage des thyristors IGCT. Dans la réalité, l'énergie électromagnétique présente dans le réseau L au moment de l'apparition du défaut est telle que l'insertion du circuit oscillant n'a pas d'effet significatif sur le courant primaire. Autrement dit, ce principe est inopérant pour application de transport d'énergie par courants continus lorsque les grandeurs nominales primaires excèdent respectivement le kilo Ampère pour les courants et la centaine de kilo-Volts pour les tensions.

Plus récemment, il a été proposé dans la demande de brevet WO 2011/057675 de réaliser un tel dispositif disjoncteur mécatronique comprenant une branche principale, i.e. celle parcourue par le courant permanent en régime nominal, avec un interrupteur-sectionneur mécanique en série électrique avec une cellule de coupure constituée d'un transistor IGBT et d'une diode en antiparallèle, une varistance en parallèle électrique, et une branche auxiliaire unique avec une pluralité de cellules de coupure constituée chacune d'un transistor IGBT et d'une diode en antiparallèle, la résistance intrinsèque de la branche auxiliaire étant bien inférieure à celle de la branche principale. Un tel disjoncteur mécatronique est supposé fonctionner de la manière suivante : en régime permanent, le transistor IGBT est à l'état passant et l'interrupteur-sectionneur mécanique est fermé, tous les transistors IGBT des cellules de coupure de la branche auxiliaire sont à l'état non passant. En régime permanent, le courant permanent circule donc à travers la branche principale. En cas de défaut sur la ligne de transmission HDVC, qui se traduit au moins par une surintensité, tous les transistors IGBT des cellules de coupure de la branche auxiliaire basculent à l'état passant et le transistor IGBT de la cellule de coupure de la branche principale bascule à l'état non passant. Tout le courant est commuté dans la branche auxiliaire, l'interrupteur-sectionneur mécanique est alors ouvert. Alors tous les transistors IGBT des cellules de coupure de la branche auxiliaire basculent à l'état non passant et le courant est alors commuté vers la varistance. Le courant est alors coupé et la surtension limitée.

Les inconvénients d'un tel disjoncteur mécatronique sont nombreux. Tout d'abord, il est indiqué (voir page 19 lignes 7-18) que si, dans les développements futurs, il était trouvé un disjoncteur électromécanique capable d'accomplir les mêmes fonctions qu'un disjoncteur à semi-conducteur actuel (transistor IGBT), typiquement capable de couper un courant de 2kA en moins de 1ms et capable de supporter une tension de 2kV, alors ce type de disjoncteur pourrait être prévu seul dans la branche principale en lieu et place du transistor IGBT et de l'interrupteur-sectionneur mécanique monté en série. Or, d'une part trouver un tel disjoncteur électromécanique nécessite de très lourds développements et d'autre part cela nécessiterait une maintenance accrue du fait même de la création d'un arc et donc de l'usure associée. De plus, dans l'ensemble des modes de réalisation proposés dans cette demande WO 2011/057675, aucun dispositif n'est prévu pour d'une part permettre la protection des transistors IGBT prévus dans la branche principale, i.e. celle parcourue par le courant permanent en régime nominal, et d'autre part faciliter la commutation du courant vers la branche auxiliaire, lors de leur basculement de l'état passant à l'état non passant. Enfin, l'inconvénient majeur du disjoncteur mécatronique proposé est que son fonctionnement suppose une puissance de commande très importante pour réaliser la commutation instantanée de l'ensemble des transistors IGBT de la branche principale. Tel que décrit dans la demande de brevet WO 2011/057675, le disjoncteur mécatronique ne peut pas fonctionner, les temps d'établissement du courant dans les branches n'ayant pas été pris en compte. Ce temps peut être extrêmement grand compte tenu des grandes dimensions nécessaires aux applications revendiquées pour des tensions supérieures par exemple à 100 kV. En outre, une telle commande de transistors IGBT est en pratique de mise en oeuvre complexe.

Le but de l'invention est alors de proposer un nouveau dispositif disjoncteur mécatronique qui pallie tout ou partie des inconvénients précités de l'art antérieur, et notamment de ceux des demandes de brevet EP1538645 et WO 2011/057675 précitées.

Un but particulier est de proposer un dispositif disjoncteur mécatronique, qui puisse convenir à la fois pour la coupure des courants alternatifs dans une large gamme de tensions, typiquement de 15kV à 145kV, et pour la coupure des courants continus, typiquement de 40kVCC à 600kVCC et pour une large gamme de courants, typiquement de 1,5kA à 4,5kA.

### EXPOSÉ DE L'INVENTION

Pour ce faire, l'invention a pour objet, un dispositif disjoncteur mécatronique destiné à couper un courant électrique circulant à travers un moyen de transmission de l'énergie électrique comportant:
- une branche principale comprenant au moins un module principal comprenant au moins une sous-branche comprenant au moins un interrupteur-sectionneur mécanique monté en série avec au moins une cellule de coupure constituée d'au moins un élément semi-conducteur de puissance à taux de conduction contrôlée;
- une branche auxiliaire montée en parallèle électrique de la branche principale et comprenant:
   - au moins une première sous-branche, dite sous-branche de temporisation, définissant une inductance de fuite de la sous-branche de temporisation par rapport à la branche principale et une résistance distribuée de tous les composants de la sous-branche de temporisation et comprenant au moins une première cellule de coupure constituée d'une pluralité de thyristors de puissance mis en cascade, au moins une des sous-branches de temporisation comprenant en outre au moins un premier module d'aide à la commutation comprenant au moins un premier condensateur avec en parallèle électrique sa résistance de décharge et un limiteur de surtension;
   - une deuxième sous-branche, dite sous-branche d'armement, montée en parallèle électrique de la sous-branche de temporisation et définissant une inductance de fuite de la sous-branche d'armement par rapport à la sous-branche de temporisation et une résistance distribuée de tous les composants de la sous-branche d'armement, et comprenant au moins une deuxième cellule de coupure constituée d'une pluralité de thyristors de puissance mis en cascade et, au moins un deuxième module d'aide à la commutation comprenant au moins un deuxième condensateur avec en parallèle électrique sa résistance de décharge et un limiteur de surtension;

- au moins un limiteur de surtension principal en parallèle électrique de la branche principale.

On précise ici que par « thyristor de puissance », il faut comprendre un thyristor au sens général, c'est-à-dire un interrupteur électronique de type semi-conducteur qui peut être commandé à l'allumage, par sa gâchette, mais pas à l'extinction, celle ci étant déclenchée par le passage à zéro du courant à son entrée. Il peut donc s'agir aussi de ses variantes connues sous l'acronyme anglais « PPT », pour « Pulsed Power Thyristor », ou sous l'acronyme anglais « GT0 », pour « Gate Turn Off Thyristor », qu'ils soient réalisés sur semi-conducteurs de type Silicium, Carbure de Silicium, Nitrure de Gallium ou tout autre élément semi-conducteur adapté aux applications de commutation de puissance sous forte tension.

Ainsi, chaque inductance de fuite ainsi définie comprend au moins l'inductance propre de la sous-branche considérée lorsqu'elle est associée à la branche principale ou à l'autre sous-branche. A cette inductance propre, on peut associer une inductance série supplémentaire dont le rôle sera de limiter la dérivée du courant par rapport au temps notée di/dt lorsque courant s'établira dans la sous-branche suivante. D'ailleurs, les thyristors de puissance de chaque sous-branche contribuent, de par les grandes dimensions dues à leur pluralité, à la valeur de l'inductance de fuite.

De même, chaque résistance distribuée comprend au moins la résistance des conducteurs et des composants constituant la sous-branche considérée, cette résistance étant à considérer du point de vue des hautes fréquences, c'est-à-dire compte tenu de l'effet de peau. La valeur de résistance augmente avec la fréquence. A cette résistance propre, on ajoute une résistance, qui peut être répartie au sein des multiples éléments constitutifs, et dont le rôle est, en association avec l'inductance, de maitriser le di/dt du courant tout en assumant les conditions nécessaires à une commutation rapide, c'est-à-dire une valeur inférieure à celle conduisant à un régime amorti critique.

Selon une variante, chaque module d'aide à la commutation peut comprendre une inductance et une résistance en série avec la pluralité de thyristors à laquelle ils sont connectés.

L'idée à la base de l'invention est donc de proposer une architecture de disjoncteur mécatronique multi-branches avec tout d'abord une branche principale permettant le passage d'un courant permanent avec très peu de pertes en régime permanent et avec au moins un interrupteur-sectionneur mécanique pour tenir la tension de rétablissement aux bornes du dispositif dans sa position d'ouverture, un limiteur de surtension principal permettant, en cas d'apparition d'une surintensité dans la branche principale, à la fois:
- permettre l'extinction totale du courant;
- de stocker temporairement l'énergie électromagnétique présente dans la ligne au moment de l'ouverture de la branche principale,
- d'évacuer cette énergie pour assurer la sécurité des personnes en cas d'intervention de maintenance, et de façon suffisamment rapide pour autoriser des cycles rapides de fonctionnement lorsque nécessaire.

Le dimensionnement du limiteur de surtension est bien entendu adapté à la tension du moyen de transmission d'énergie électrique dans lequel le disjoncteur mécatronique est inséré et à l'énergie devant être stockée puis dissipée. Il détermine la valeur maximum de la tension transitoire de rétablissement aux bornes du dispositif. Il détermine aussi la vitesse d'élimination définitive du défaut, lequel sera éliminé d'autant plus rapidement que la tension de seuil du limiteur sera élevée.

Selon l'invention, on prévoit une branche auxiliaire qui permet, soit en cas d'apparition d'une surintensité dans la branche principale, soit à la réception d'un ordre spécifique, à la fois de:
- permettre le transfert du courant de la branche principale vers le limiteur de surtension principal.
- maîtriser la tension aux bornes du dispositif pour garantir que, pendant la phase de coupure, elle reste inférieure à la tenue diélectrique de tous ses composants,
- maîtriser l'évolution de la tension transitoire de rétablissement, en particulier sa vitesse de croissance.

Selon un mode de réalisation avantageux, afin de couper un courant qui peut venir dans un sens ou dans le sens opposé à travers le moyen de transmission de l'énergie, chaque sous-branche d'un module principal comprend au moins un interrupteur-sectionneur mécanique monté en série entre deux cellules de coupure à semi-conducteur de puissance; chaque cellule de coupure étant en anti-série l'une avec l'autre.

Selon une variante avantageuse, le dispositif disjoncteur mécatronique selon l'invention comprend en outre un limiteur de vitesse de croissance de tension, en parallèle électrique de chaque cellule de coupure d'un module principal; le limiteur de vitesse de croissance étant constitué d'une diode en série électrique avec un condensateur lui-même en parallèle électrique avec sa résistance de décharge. On peut avantageusement prévoir en outre un limiteur de surtension en parallèle électrique de chaque cellule de coupure d'un module principal.

Selon une variante préférée, chaque cellule de coupure d'une sous-branche d'un module principal est constituée d'au moins un élément semi-conducteur de puissance à taux de conduction contrôlée et chaque sous-branche d'un module principal comprend une diode en antiparallèle d'une cellule de coupure.

Selon une variante de réalisation, l'élément semi-conducteur de puissance à taux de conduction contrôlée d'une cellule de coupure d'un module principal est un transistor bipolaire à porte isolée (IGBT).

Selon une variante préférée, l'élément semi-conducteur de puissance à taux de conduction contrôlée d'une cellule de coupure d'une sous-branche d'un module principal est constitué d'au moins un transistor à effet de champ et d'un transistor bipolaire à porte isolée (IGBT) en série électrique avec le transistor à effet de champ par connexion du drain du transistor à effet de champ avec l'émetteur du transistor IGBT, leurs grilles G étant connectées à un circuit de commande assurant à l'ensemble un comportement en commutation du type montage cascode. En fonction de la valeur du courant permanent à faire transiter, la branche principale comprend plusieurs modules principaux en parallèle électrique les uns avec les autres, avec avantageusement chaque module principal qui comporte plusieurs sous-branches en parallèle électrique les unes avec les autres. Selon un mode de réalisation préféré, la branche auxiliaire comprend au moins deux sous-branches de temporisation en parallèle électrique l'une de l'autre, la deuxième sous-branche de temporisation comprenant au moins une troisième cellule de coupure constituée d'une pluralité de thyristors de puissance mis en cascade et au moins un troisième module d'aide à la commutation avec au moins un troisième condensateur, au moins une troisième inductance et au moins une troisième résistance en série électrique avec le troisième condensateur lui-même en parallèle électrique avec sa résistance de décharge et un limiteur de surtension lui-même en série avec une résistance.

Selon une variante préférée, chaque interrupteur-sectionneur mécanique de chaque sous-branche de chaque module principal est constitué de deux ampoules à vide en série électrique.

L'invention concerne également un ensemble d'appareillages électrique destiné à être implanté dans un moyen de transmission de l'énergie électrique haute tension, en courant alternatif ou en courant continu, comprenant un disjoncteur mécatronique décrit ci-dessus, et aux bornes duquel sont connectés en série de part et d'autre au moins un appareillage électrique de mise à la terre.

Cet ensemble d'appareillages comprend avantageusement un appareillage de pontage monté en parallèle électrique aux bornes du disjoncteur mécatronique et adapté pour faire transiter sur commande et pendant un temps déterminé un courant transitoire, supérieur au pouvoir du disjoncteur mécatronique, d'une borne à l'autre du disjoncteur sans passer par ce dernier.

De préférence, il comprend en outre, de part et d'autre des bornes du disjoncteur hybride, un appareillage de sectionnement monté en série électrique avec le disjoncteur mécatronique et à l'extérieur des bornes de connexions électriques des appareillages de mise à la terre. Avantageusement, l'ensemble d'appareillages comprend en outre entre une borne de connexion électrique d'un appareillage de mise à la terre et un appareillage de sectionnement, un appareillage d'insertion de résistance électrique en série électrique avec ce dernier. De préférence, la valeur de cette résistance à insérer est égale à l'impédance caractéristique de la ligne ou du câble auxquels le disjoncteur mécatronique selon l'invention est raccordé en série électrique. Ainsi, de préférence, la résistance électrique a une valeur comprise entre 100 Ω (Ohm) et 1 000 Ω.

Selon une variante préférée, l'ensemble d'appareillages comprend un disjoncteur supplémentaire en série électrique avec le dispositif disjoncteur mécatronique, le disjoncteur supplémentaire étant adapté pour couper les faibles courants. Typiquement, les faibles courants à couper sont inférieurs à 100 A. Un tel disjoncteur supplémentaire peut être un disjoncteur de transfert pour retour métallique (M.R.T.B). Il peut aussi s'agir d'un disjoncteur de type mécanique à soufflage d'arc.

Avantageusement, les appareillages et disjoncteur supplémentaire sont conçus sous forme modulaire seul ou associés à plusieurs.

L'invention concerne également un procédé de déclenchement d'un dispositif disjoncteur mécatronique décrit ci-dessus, selon lequel en présence uniquement d'un courant permanent dans la branche principale, et en l'absence d'ordre spécifique, on maintient chaque interrupteur-sectionneur en position fermée et l'(les) élément(s) semi-conducteur de puissance à taux de conduction contrôlée à l'état passant et l'ensemble des thyristors de puissance de la branche auxiliaire à l'état non-passant et selon lequel soit en cas d'une surintensité de courant dans la branche principale du dispositif, soit à la réception d'un ordre spécifique, il comporte les étapes suivantes:
a/ basculement de l'état passant à un état non passant de l' (des) élément(s) semi-conducteur de puissance à taux de conduction contrôlée tout en maintenant fermé chaque interrupteur-sectionneur de sorte à dévier la totalité du courant dans la au moins une sous-branche de temporisation pendant une durée nécessaire à l'ouverture de chaque interrupteur-sectionneur mécanique;
b/ de façon synchrone à l'étape a/ basculement de l'état non passant à un état passant des thyristors de puissance d'au moins une sous-branche de temporisation pour atteindre un niveau de tension aux bornes de la branche principale et de celle auxiliaire permettant à la fois de ne faire circuler aucun courant ni dans la branche principale, ni dans la branche d'armement et ni dans le limiteur de surtension, de permettre le basculement ultérieur de l'état non passant à un état passant des thyristors de puissance de la branche d'armement en position d'ouverture de chaque interrupteur-sectionneur mécanique et de permettre le basculement ultérieur de l'état passant à l'état non passant des thyristors de puissance de la au moins une sous branche de temporisation en position d'ouverture de chaque interrupteur-sectionneur mécanique;
c/ une fois l'étape b/ réalisée, ouverture de chaque interrupteur-sectionneur mécanique;
d/ une fois l'étape c/ réalisée et lorsque chaque interrupteur-sectionneur mécanique a atteint sa position d'ouverture, basculement de l'état non passant à un état passant des thyristors de puissance de la sous-branche d'armement pour atteindre un niveau de tension à ses bornes permettant de dévier la totalité du courant vers le(s) limiteur(s) de surtension;
e/ extinction du courant par le(s) limiteur(s) de surtension principal(ux).

Selon une variante avantageuse, on réalise en outre une étape f/, d'élimination des éventuels courants de fuite résiduels par ouverture d'au moins un appareillage de sectionnement en série avec le disjoncteur mécatronique selon l'invention.

Un système de contrôle commande met en oeuvre le procédé décrit ci-dessus.

### BRÈVE DESCRIPTION DES DESSINS

D'autres avantages et caractéristiques de l'invention ressortiront mieux à la lecture de la description détaillée faite en référence aux figures suivantes parmi lesquelles:
- la figure 1 est une vue schématique de l'architecture électrique globale d'un dispositif disjoncteur mécatronique selon l'invention ;
- la figure 2 est une vue du schéma électrique global d'un premier mode de réalisation du dispositif-disjoncteur hybride selon l'invention;
- les figures 2A à 2H sont des vues des schémas électriques équivalents du disjoncteur mécatronique selon la figure 2 en fonction des différentes étapes de déclenchement à partir de l'apparition d'un courant de défaut;
- la figure 2I une vue du schéma électrique global d'un premier mode de réalisation du dispositif-disjoncteur hybride selon l'invention ;
- la figure 3 représente les différentes courbes de courant dans les différentes branches du disjoncteur mécatronique selon la figure 2 en fonction du temps corrélé aux différentes étapes des figures 2A à 2H;
- la figure 4 est une vue schématique d'une architecture globale d'un ensemble d'appareillages électrique comprenant un dispositif disjoncteur mécatronique selon l'invention;
- la figure 5 est une vue du schéma électrique d'un mode de réalisation d'une module principal d'une branche principale de disjoncteur mécatronique selon l'invention;
- la figure 5A est une vue du schéma électrique d'une variante de réalisation d'une module principal selon la figure 5 selon laquelle le module est de structure modulaire;
- la figure 6 est une vue du schéma électrique d'un mode de réalisation également de structure modulaire d'une module principal selon la figure 5;
- la figure 6A est une vue du schéma électrique d'une variante de réalisation d'une module principal selon la figure 6;
- la figure 7 est une vue du schéma électrique d'une variante de réalisation d'une cellule de coupure selon l'invention.

### EXPOSÉ DÉTAILLÉ DE MODES DE RÉALISATION PARTICULIERS

Bien que décrite spécifiquement en relation avec l'application de coupure de courant continu élevé dans une ligne de distribution et/ou de transmission, l'invention peut être envisagée pour d'autres applications.

En particulier, on peut mettre en oeuvre le disjoncteur mécatronique selon l'invention pour couper des courants alternatifs.

On peut également mettre en oeuvre le disjoncteur mécatronique selon l'invention dans une ligne à isolation gazeuse (en anglais Gas Insulated Line, GIL en abrégé).

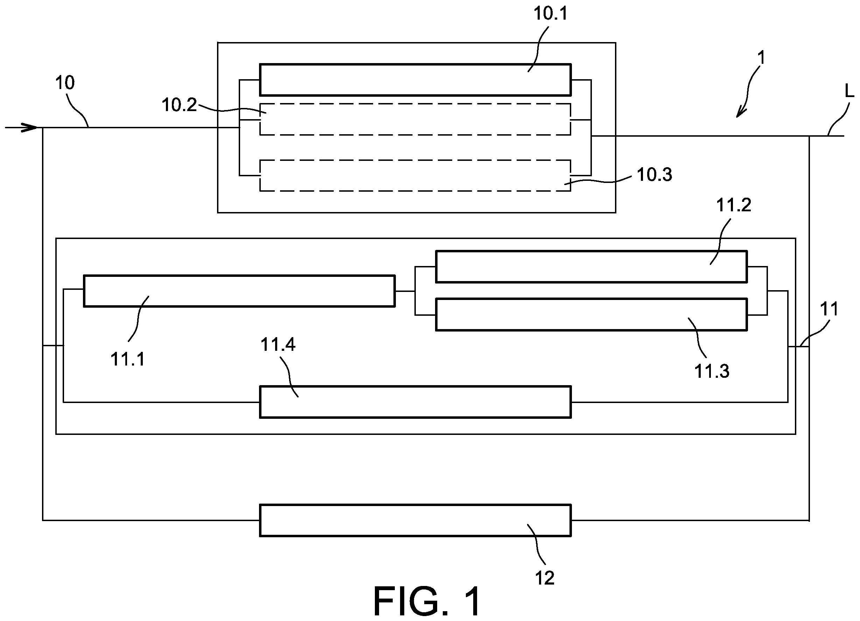

On a représenté en **figure 1** une architecture électrique globale d'un dispositif disjoncteur mécatronique 1 selon l'invention destiné à couper des courants continus élevés dans des réseaux de transmission L dans une gamme de tension jusqu'à 320kVCC. Les inventeurs pensent d'ailleurs qu'à l'avenir un tel disjoncteur mécatronique pourra couper des courants continus dans une gamme jusqu'à 500kVCC voire au-delà.

Un tel dispositif 1 comprend tout d'abord une branche principale 10 dans laquelle circule le courant primaire en régime permanent. Elle comprend une pluralité de modules principaux 10.1, 10.2, 10.n identiques et en parallèle électrique les uns avec les autres. Chacun des modules principaux 10.1, 10.2, 10.n est lui-même constitué d'une pluralité de sous-branches fonctionnellement identiques et en parallèle électrique les unes avec les autres. On décrit les fonctions de chaque branche et sous-branche et de leurs composants électroniques associés pour une opération de coupure du courant. i.e. à l'apparition d'un défaut sur le réseau L dans lequel est intégré le disjoncteur hybride selon l'invention, qui se traduit au moins par une surintensité.

Chaque module principal comprend au moins un interrupteur-sectionneur mécanique 100 en série électrique avec deux sous-modules d'aide à la commutation électronique. Plus la tension du réseau dans lequel est intégré un disjoncteur mécatronique selon l'invention est élevée, plus on augmente en conséquence le nombre d'interrupteurs-sectionneur mécanique connectés en série. De préférence, un interrupteur-sectionneur mécanique est constitué de deux ampoules à vide en série, ayant typiquement un pouvoir de coupure pouvant atteindre quelques kA en courant alternatif. Un actionneur électromagnétique développé spécifiquement pour les manoeuvres des interrupteurs-sectionneurs mécaniques selon l'invention est décrit et revendiqué dans la demande de brevet déposé le même jour que la présente demande et intitulée « *Actionneur à aimants permanents et interrupteur mécanique actionné par un tel actionneur* »*.*

Chaque sous module d'aide à la commutation électronique de part et d'autre de(s) l'interrupteur-sectionneur mécanique comprend un ou plusieurs éléments à semi-conducteur de puissance à taux de conduction contrôlée. De préférence, il s'agit de transistors à base de Silicium, de type IGBT (acronyme anglais de Insulated Gate Bipolar Transistors). Il peut également s'agir de composants à base de Carbure de Silicium, actuellement en cours de développement, comme des transistors hybrides JFET/BJT, ou même de Thyristors de type GTO. Chaque sous-module doit réaliser les fonctions suivantes:
- effectuer la mise en parallèle de plusieurs sous-branches d'une pluralité d'interrupteurs sectionneurs mécanique ;
- mesurer le courant circulant dans chacune de ces sous branches ;
- assurer l'équilibrage dynamique des courants dans chacune de ces sous branches, de façon à ce que les échauffements dans les divers composants des sous branches soient maitrisés.

Les éléments à semi-conducteur de puissance à taux de conduction contrôlée doivent réaliser les fonctions suivantes :
- en régime de conduction, ils permettent, soit via le contrôle de leur conductivité, soit via le contrôle de leur taux de conduction définit comme le rapport entre leur durée de conduction et la somme de leur durée de conduction et de leur durée de non-conduction, d'assurer le réglage des courants dans chacune des sous-branches d'un même module principal 10.1, 10.2, ..10.n en vue d'assurer l'équilibrage thermique des constituants des sous-branches de ce module, et aussi le réglage des courants dans chacun des modules principaux 10.1, 10.2, ..10.n en vue d'assurer leur équilibrage thermique;
- permettre la commutation rapide du courant de la branche principale 10 vers la branche auxiliaire 11, comme expliqué par la suite ;
- permettre le retour à la conduction de la branche principale.
- désactiver une ou plusieurs sous-branches d'un même module principal 10.1, 10.2, ..10.n lorsque le courant d'une sous branche est anormalement différent de la moyenne des courants transitant dans les autres sous branches, cette désactivation donnant lieu à la télésignalisation d'un défaut, et permettant la mise en sécurité des composants impliqués dans le défaut.

A l'état passant, compte tenu du courant relativement élevé qui les traverse, et de la chute de tension développée à leurs bornes, chacun des composants électronique d'un sous module d'aide à la commutation électronique dissipe une puissance thermique importante. On veille donc à ce que le montage de ces composants assure la dissipation correcte de cette puissance thermique.

De préférence, cette dissipation est effectuée de façon passive, par convection naturelle de l'air ou du gaz entourant les sous modules d'aide à la commutation électronique, et grâce à une orientation géométrique de ceux-ci optimisant cette convection.

Dans un mode préféré de réalisation, les transistors IGBT sont équipés de diodes montées en antiparallèle.

En parallèle de la branche principale 10 est prévue une branche auxiliaire 11 avec trois sous-branches de temporisation 11.1, 11.2, 11.3 et une sous-branche d'armement 11.4.

Chacune des sous-branches 11.1, 11.2, 11.3, 11.4 comprend une pluralité de thyristors de puissance en cascade. Pour certaines applications, le sens du courant primaire peut s'inverser. C'est le cas évidemment en courant alternatif, mais aussi le cas en courant continu lorsque l'emplacement du disjoncteur 1 est tel que le sens du flux de puissance le traversant peut s'inverser. Typiquement, cela est le cas pour des réseaux en courant continu à tension élevée (HDVC) qui sont interconnectés. Alors, dans ces cas là, on duplique dans chaque sous-branche la pluralité de thyristors de puissance de façon à ce que chaque pluralité soit dédiée à un sens de passage du courant, et on connecte donc les pluralités de thyristors en parallèle tête bêche entre eux.

On peut envisager qu'une pluralité de thyristors de puissance soit formée par la mise en série de plusieurs groupes, le nombre de groupes dépendant de la tension d'utilisation à laquelle est soumise le disjoncteur mécatronique selon l'invention. Cela peut être fait pour des raisons de commodités industrielles, telles que la masse limite des objets à manipuler, la hauteur maximum raisonnable au delà de laquelle il est impossible de garantir la mise en compression correcte de chaque pluralité de thyristors.... De préférence, un groupe est constitué d'un nombre égal à dix thyristors de puissance mis en cascade et identiques.

Chaque thyristor de puissance haute tension est associé à son module de commande de gâchette, son ou ses condensateurs de transfert, ainsi qu'un certain nombre d'autres éléments destinés à contribuer à sa commande, sa surveillance et sa mise en sécurité pour former une pluralité de thyristors en cascade.

Un module de commande de gâchette assure le pilotage d'un thyristor de puissance auquel il est associé. Il doit donc réaliser les fonctions suivantes:
- recevoir une demande de signalisation d'état, délivrée par un autre module de commande de gâchette précédent ou par un système de contrôle commande, selon sa position dans la sous-branche considérée ;
- recopier et transmettre cette signalisation au module de commande de gâchette suivant, ou au système de contrôle commande, selon sa position dans la branche considérée, la réception par le système de contrôle commande de cette recopie signifiant que tous les modules de commande de gâchettes impliqués sont dans un état de fonctionnement correct, la non réception signifiant qu'une partie au moins des modules de commandes impliqués ne sont pas dans un étant de fonctionnement correct, cet information permettant au système de contrôle commande d'émettre si nécessaire une télésignalisation de défaut et d'appliquer une stratégie de sécurisation du disjoncteur mécatronique empêchant par exemple toute opération qui ne pourrait se dérouler entièrement;
- recevoir un ordre de mise en conduction, délivré par un autre module de commande de gâchette précédent ou par un système de contrôle commande, selon sa position dans la sous-branche considérée ;
- recopier et transmettre cet ordre au module de commande de gâchette suivant, ou au système de contrôle commande, selon sa position dans la branche considérée ;
- exécuter cet ordre en délivrant au thyristor de puissance l'impulsion de commande dont il a besoin pour passer de l'état non conducteur (passant) à l'état conducteur (non passant) ;
- stocker l'énergie nécessaire à la mise en conduction du thyristor.
- protéger contre les surtensions le thyristor de puissance auquel il est associé, via un ou plusieurs limiteurs de surtension de type ZnO ou de type diode Zener de puissance, lesquelles sont connues sous le nom de diodes Transils.

Chaque module de commande de gâchette d'un thyristor de puissance donné tire son énergie du courant qui le traverse lorsqu'une tension apparaît aux bornes des condensateurs de transfert auxquels il est associé. Ces condensateurs ont donc pour fonction de transférer de l'énergie dans les modules de commande de gâchette. Ils forment une chaîne dont chaque maillon est constitué d'un condensateur de transfert et de modules de commande de gâchettes, et le cas échéant d'autres composants tels que des résistances d'amortissement. L'ensemble (modules de commande et condensateurs de transfert) est en parallèle électrique avec une pluralité de thyristors de puissance.

La première sous-branche de temporisation 11.1 a pour fonction d'assurer l'essentiel de la tenue diélectrique des branches de temporisation particulièrement lors de l'apparition de la tension de rétablissement à ses bornes.

La deuxième sous-branche de temporisation 11.2 doit réaliser les fonctions suivantes :
- dériver le courant pendant une durée suffisante pour que chaque interrupteur-sectionneur mécanique commence à s'ouvrir et qu'il soit capable de tenir un premier niveau de tension.
- assurer une chute de tension suffisamment basse pour ne pas entrainer la mise en conduction des limiteurs de surtension connectés en parallèle sur les éléments à semi-conducteurs de puissance de la branche principale 10;
- assurer une chute de tension suffisamment élevée pour faciliter, le moment venu, la commutation du courant vers la troisième sous-branche de temporisation 11.3
- stocker une tension suffisante pour assurer le blocage de ses propres thyristors de puissance lors de la mise en conduction de la troisième sous-branche de temporisation 11.3.

On précise ici que le nombre nécessaire de deux sous-branches de temporisation 11.2, 11.3 est rendu nécessaire principalement par les limitations de tenue en di/dt et du/dt des thyristors de puissance mais également par les tensions de tenue des éléments à semi-conducteur de puissance à taux de conduction contrôlée (IGBT), des limiteurs de surtension, et aussi des valeurs de tension et de surtension du réseau. Au moment d'actionner la mise en conduction de la sous-branche d'armement 11.4, la troisième sous-branche de temporisation 11.3 doit développer une tension de l'ordre de 10 % à 20% de la tension de rétablissement aux bornes du disjoncteur mécatronique 1, afin de limiter les contraintes en di/dt des thyristors de puissance grâce à l'insertion d'inductances série, lesquelles augmentent le niveau de tension requis pour assurer la commutation d'une branche vers la suivante.

La troisième sous-branche de temporisation 11.3 doit réaliser les fonctions suivantes :
- dériver le courant depuis la deuxième sous-branche de temporisation 11.2 vers elle-même une fois que les interrupteur-sectionneurs mécanique ont atteint un premier niveau d'ouverture, et pendant la durée nécessaire à chaque interrupteur-mécanique pour être capable de tenir diélectriquement la tension de rétablissement aux bornes ;
- assurer une chute de tension suffisamment basse pour ne pas entrainer le claquage diélectrique de chaque interrupteur-mécanique ;
- assurer une chute de tension suffisamment élevée pour faciliter, le moment venu, la commutation du courant présent dans ladite sous-branche 11.3 vers la sous-branche d'armement 11.4 ;
- stocker une tension et une énergie suffisantes pour assurer le blocage de ses propres thyristors de puissance lors de la mise en conduction la sous-branche d'armement 11.4.

La sous-branche d'armement 11.4 a pour fonction essentielle d'insérer une impédance instantanée variable dans le circuit. L'impédance instantanée peut être définie comme le rapport entre la tension instantanée à ses bornes et le courant instantané qui la traverse. Autrement dit, la sous-branche d'armement 11.4 doit donc présenter:
- à l'instant de sa mise en conduction, une très basse impédance instantané, de façon à ce que la totalité du courant primaire soit dévié vers elle-même;
- pendant sa conduction, une impédance instantanée croissante de façon à ce que la tension à ses bornes induise la mise en conduction du limiteur de surtension principal 12.
- après sa période de conduction, une très haute impédance de façon à ce que le courant de fuite résiduel éventuel qui la traverse soit négligeable.

Dans chacune des deuxième 11.2 et troisième 11.3 sous-branche de temporisation et sous-branche d'armement 11.4, il est prévu au moins un module d'aide à la commutation électronique qui doit réaliser les fonctions suivantes dans sa propre sous-branche :
- limiter la dérivée du courant par rapport au temps notée di/dt;
- maintenir une tension constante aux bornes du disjoncteur mécatronique pour le module de la deuxième sous-branche de temporisation 11.2 ;
- développer une tension croissante de façon à permettre la commutation vers la sous-branche d'armement 11.4, pour le module de la troisième sous-branche de temporisation 11.3 ;
- développer une tension suffisamment élevée pour permettre la commutation vers le limiteur de surtension principale 12 pour le module de la sous-branche d'armement 11.4.

Un module d'aide à la commutation électronique est constitué de la mise en parallèle d'au moins un condensateur, d'une résistance de décharge de ce condensateur, et pour les deux sous-branches de temporisation 11.2, 11.3 d'un limiteur de surtension auxiliaire (parafoudre). On peut lui associer une ou plusieurs inductances en série, ainsi qu'une ou plusieurs résistances en série.

Le disjoncteur mécatronique selon l'invention comprend enfin un limiteur de surtension principal 12 en parallèle électrique de la branche principale 10, et doit réaliser les fonctions suivantes:
- assurer l'extinction totale du courant ;
- stocker temporairement l'énergie électromagnétique présente dans la ligne au moment de l'ouverture de la branche principale 10 ;
- si nécessaire évacuer cette énergie de façon suffisamment rapide pour autoriser des cycles de fonctionnement également rapides.

Dans un mode de réalisation préféré, le limiteur de surtension 12 est constitué d'un ensemble de parafoudres de type ZnO.

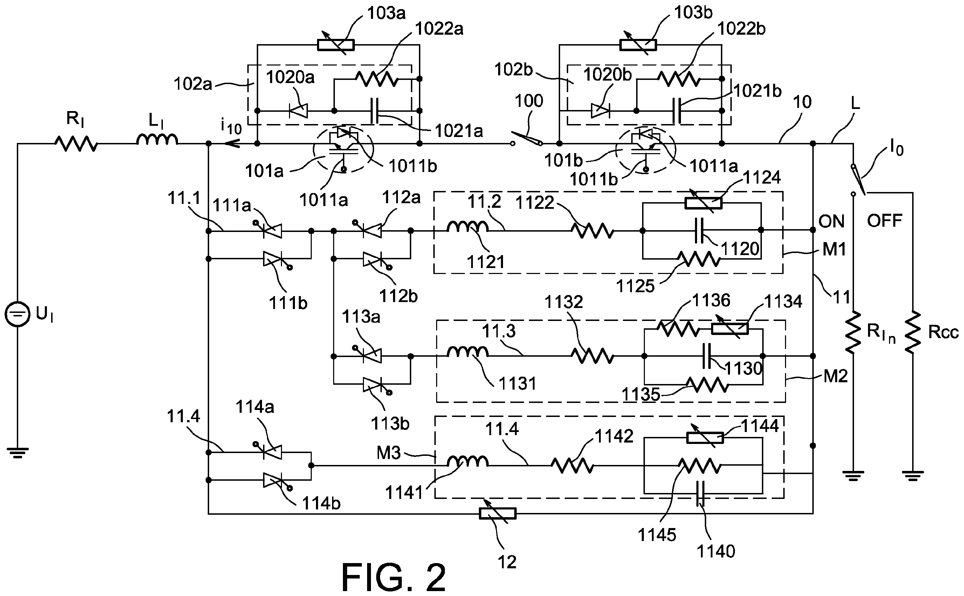

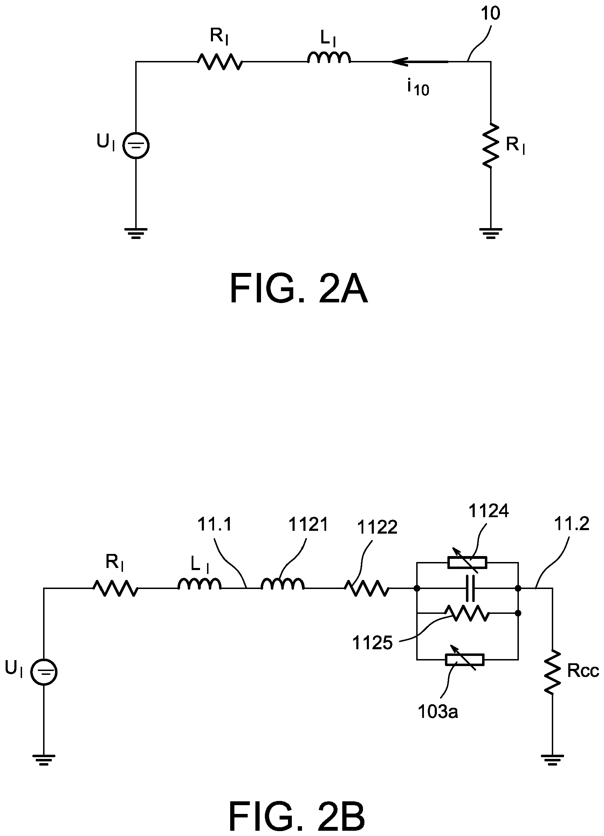

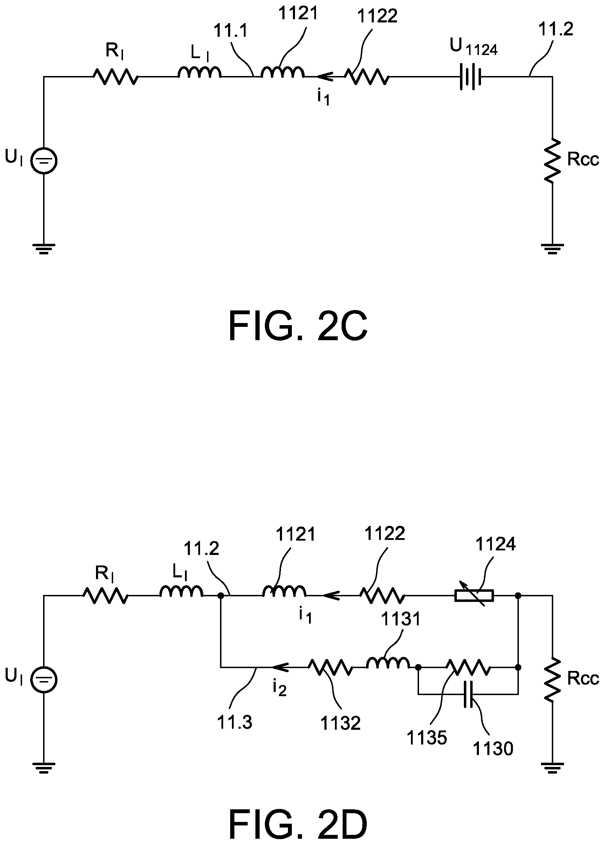

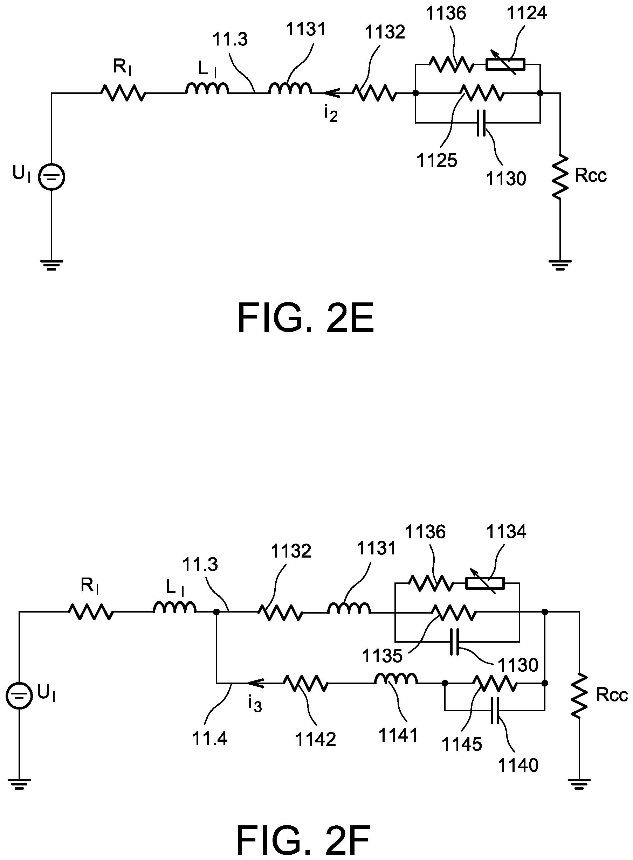

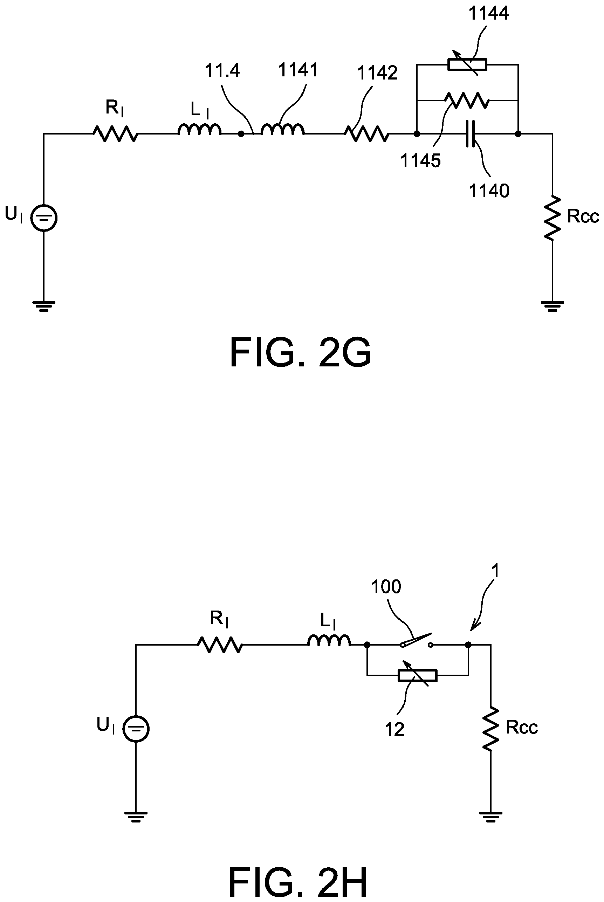

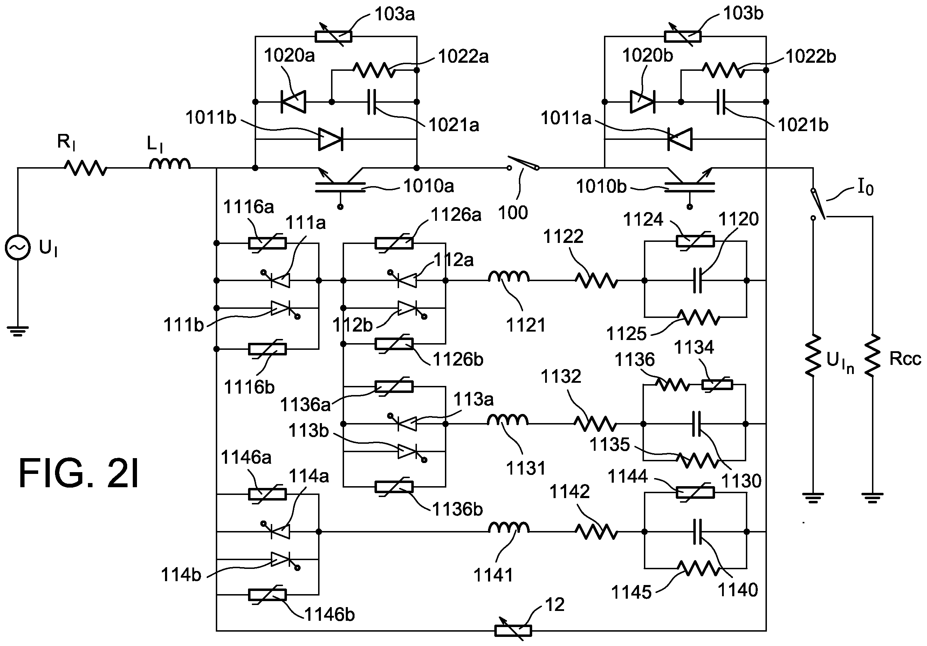

On décrit maintenant un mode de réalisation d'un disjoncteur mécatronique 1 selon l'invention en référence aux **figures 2 à 2H****.**

On précise ici que les indices « L » sont relatifs à la ligne L de transmission d'électricité dans laquelle le disjoncteur mécatronique selon l'invention est inséré : ainsi U_{L}, R_{L}, L_{L} désignent respectivement le niveau de haute tension, la résistance, l'inductance de la ligne L.

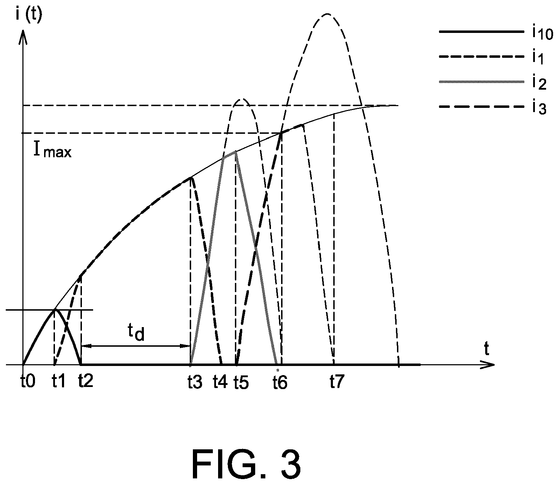

On précise ici que les indices a sont relatifs aux composants électroniques du disjoncteur mécatronique qui sont dédiés à un sens de passage du courant (de la droite vers la gauche sur les figures concernées). Les indices b sont relatifs aux composants électroniques qui sont dédiés au sens de passage de courant opposé à a. Par souci de clarté, du fait que les composants concernés a sont identiques et montés électriquement tête-bêche à ceux b dédiés au sens opposé du courant on ne décrit que ceux-ci. On comprend aisément que la disposition est symétrique, à l'exception des diodes de roue libre des transistors IGBT, l'une notée 1011a fonctionnant avec le transistor IGBT 1010a avec lequel elle n'est pas en antiparallèle, l'autre diode notée 1011b fonctionnant avec le transistor 1010b avec lequel elle n'est pas non plus en antiparallèle. On précise d'ailleurs que sur la figure 2I, les diodes 1011a et 1011b sont représentées en antiparallèle sur leur cellule de coupure respective 101b, 101a et non sur l'élément semi-conducteur de puissance à taux de conduction contrôlée respectivement 1010b, 1010a comme montré sur la **figure 3****.** En effet, les diodes 1011a et 1011b sont de préférence des éléments à part entière des cellules de coupure 101b, 101a.

On précise également que l'on a représenté, sur les figures 2 à 2I, qu'une seule sous-branche d'un seul module principal dans la branche principale 10 et que donc seule celle-ci est décrite ici.

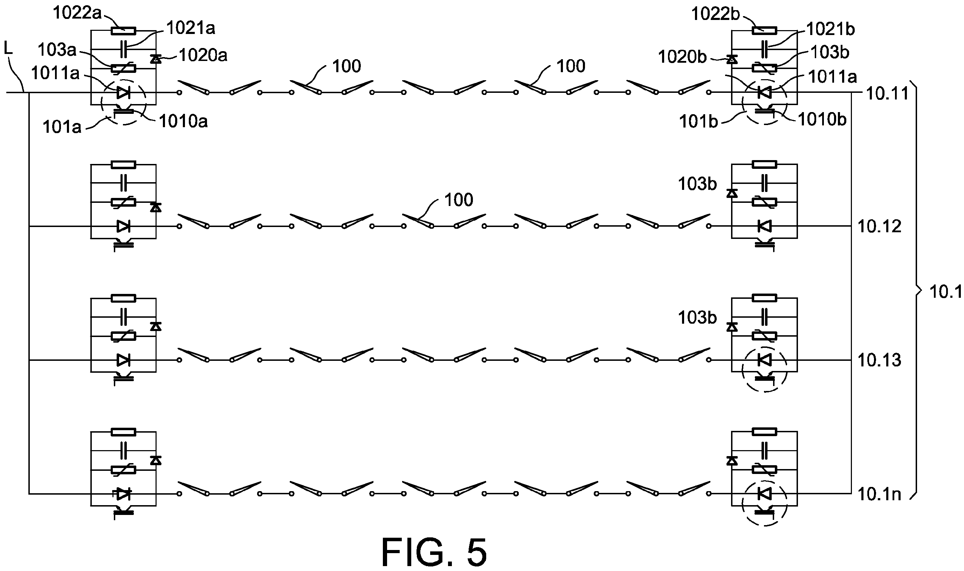

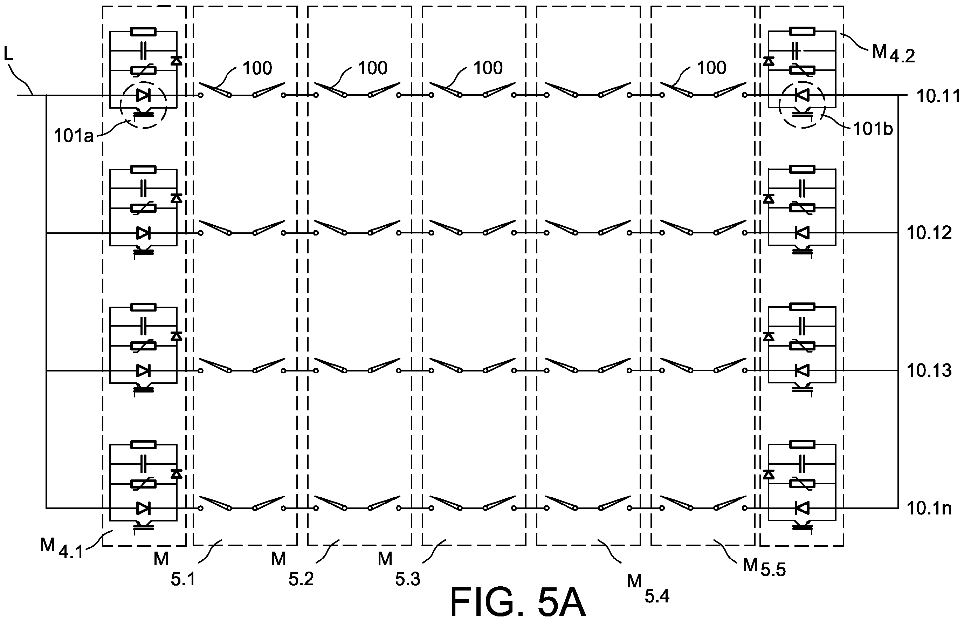

On précise également que l'on a représenté sur les figures 2 à 2I, qu'un seul interrupteur-sectionneur mécanique 100, mais que de fait, il peut s'agir d'une pluralité d'interrupteur-sectionneur mécaniques connectés en série, et que les composants linéaires et non linéaires destinés à assurer la coordination de l'isolement et la répartition des tensions aux bornes des interrupteurs-sectionneurs mécaniques de chacune des sous-branches ne sont pas non plus représentés. Un module principal 10.1 avec une pluralité de sous-branches, d'interrupteur-sectionneur en série et les composants linéaires et non linéaires associés est décrit ci-après en référence aux figures 5 à 6C.

On précise également que l'on a représenté sur les figures 2 à 2I, qu'un seul thyristor de puissance à chaque endroit concerné mais que de fait il s'agit d'une pluralité de thyristors en cascade. Seul un de ceux-ci est donc décrit.

On précise enfin que l'on a seulement symbolisé sur les figures 2 à 2H, un thyristor de puissance en tant que tel sans montrer son (ses) condensateur(s) de transfert et le dispositif de commande de sa gâchette associés. En figure 2I, on a représenté en parallèle aux bornes de chaque thyristor de puissance 111a, 111b; 112a, 112b ; 113a, 113b ; 114a, 114b, un limiteur de surtension (parafoudre) respectivement 1116a, 1116b; 1126a, 1126b ; 1136a, 1136b ; 1146a, 1146b. De fait, lorsqu'il s'agit d'une pluralité de thyristors de puissance en cascade, il est prévu une pluralité de limiteurs de surtension en série électrique entre eux, ladite pluralité de limiteurs de surtension étant en parallèle électrique de la pluralité de thyristors de puissance concernée. Chaque un limiteur de surtension (parafoudre) 1116a, 1116b; 1126a, 1126b ; 1136a, 1136b ; 1146a, 1146b a ainsi pour fonction de répartir la tension de rétablissement sur chaque thyristor de puissance.

La branche principale 10 comprend un interrupteur-sectionneur mécanique 100 en série électrique avec une cellule de coupure 101a. Cette cellule de coupure 101a est constituée d'un transistor bipolaire à porte isolée (IGBT) 1010a en antiparallèle avec une diode 1011b. De préférence, les cellules de coupure 101a, 101b sont montées en extrémité de branche principale 10 de part et d'autre de l' (des) interrupteur-sectionneur(s) mécanique 100.

En parallèle électrique de la cellule de coupure 101a est monté un limiteur de vitesse de croissance de tension 102a. Le limiteur de vitesse de croissance est constitué d'une diode 1020a en série électrique avec un condensateur 1021a lui-même en parallèle électrique avec sa résistance de décharge 1022a. Le condensateur 1020a permet la maitrise de la vitesse de croissance de la tension à ses bornes lorsque le transistor IGBT 101a est basculé à l'état non passant. La diode 102a empêche la décharge violente du condensateur 1021a lors de la mise en conduction de du transistor IGBT 101a. Enfin, la résistance 1022a permet la décharge lente du condensateur 102a. Autrement dit, ce limiteur de tension 102a associé au transistor IGBT 1010a protège ce dernier par la maitrise de la vitesse de croissance de la tension à ses bornes lors de sa commutation de l'état conducteur (passant) vers l'état non conducteur (non passant). Cette limitation de la vitesse de croissance de la tension a en outre un effet bénéfique pour la commutation du courant de la branche principale vers la branche auxiliaire en ce sens qu'elle contribue à la maitrise du di/dt du courant dans cette dernière.

Egalement en parallèle électrique de la cellule de coupure 101a est monté un limiteur de surtension 103a. Celui-ci est déterminé de sorte qu'il limite la tension à une valeur inférieure à la tenue en tension du transistor IGBT 101a. Typiquement, pour un transistor IGBT 101a de 3300V de tenue en tension, on détermine une valeur maximale de tension égale à 2800V limitée par le limiteur 103a.

La branche auxiliaire 11 comprend une première sous-branche de temporisation 11.1 comprenant une pluralité de thyristors de puissance 111a mis en cascade.

Une deuxième sous-branche de temporisation 11.2, dans le prolongement de la première sous-branche de temporisation 11.1, comprend un premier module M1 d'aide à la commutation avec un premier condensateur 1120, une première inductance 1121 et une première résistance 1122 en série électrique avec le premier condensateur lui-même en parallèle électrique avec sa résistance de décharge 1125. Un limiteur de surtension auxiliaire 1124 est en parallèle électrique avec le condensateur 1120 et permet à la fois de le protéger et de protéger sa résistance de décharge 1125 et aussi de définir et limiter la tension qui apparaitra aux bornes de la branche auxiliaire lorsque la deuxième sous-branche de temporisation 11.2 sera traversée par le courant primaire.

On précise ici que l'inductance 1121 et la résisatance 1122 ne sont pas impératives: en effet, leurs valeurs dépendent des valeurs globales des constantes distribuées de la première sous-branche de temporisation 11.1 et de la sous-branche de temporisation 11.2, définies au moins par les résistances intrinsèques et inductances de fuite.

Une troisième sous-branche de temporisation 11.3, en parallèle électrique de la deuxième sous-branche de temporisation 11.2, comprend de manière analogue à la deuxième sous-branche de temporisation, deuxième module M2 d'aide à la commutation avec un deuxième condensateur 1130, une deuxième inductance 1131 et une deuxième résistance 1132 en série électrique avec le deuxième condensateur lui-même en parallèle électrique avec sa résistance de décharge 1135. Un limiteur de surtension auxiliaire 1134 est en parallèle électrique avec le condensateur 1130 et permet à la fois de le protéger et de protéger sa résistance de décharge 1135 et aussi de définir et limiter la tension qui apparaitra aux bornes de la branche auxiliaire lorsque la troisième sous-branche de temporisation 11.3 sera traversée par le courant primaire. En outre, il est prévu une résistance supplémentaire 1136 en série électrique avec le deuxième limiteur de surtension auxiliaire 1134, cette résistance permettant d'ajuster, en fonction des caractéristiques du limiteur de surtension auxiliaire 1134, l'évolution de la tension qui apparaitra aux bornes de la branche auxiliaire lorsque la troisième sous-branche de temporisation 11.3 sera traversée par le courant primaire.

On précise ici que la résistance 1136 peut être omise si les caractéristiques du limiteur de surtension auxiliaire 1134 sont intrinsèquement adaptées au besoin.

On précise également ici que l'inductance 1131 et la résistance 1132 ne sont pas impératives: en effet, leurs valeurs dépendent des valeurs globales des constantes distribuées de la première sous-branche de temporisation 11.1 et de la sous-branche de temporisation 11.3, définies au moins par les résistances intrinsèques et inductances de fuite.

La branche auxiliaire 11 comprend enfin une sous-branche d'armement 11.4 comprenant également une pluralité de thyristors de puissance 114a mis en cascade et un troisième module d'aide à la commutation M3 analogue aux deux premiers modules d'aide à la commutation M1 et M2. Plus exactement, ce troisième module d'aide à la commutation M3 comprend un troisième condensateur 1140, une troisième inductance 1141 et une troisième résistance 1142 en série électrique avec le troisième condensateur lui-même en parallèle électrique avec sa résistance de décharge 1145. Un limiteur de surtension auxiliaire 1144 est en parallèle électrique avec le condensateur 1140 et permet à la fois de le protéger et de protéger sa résistance de décharge 1145 lorsque le limiteur de surtension principal 12 sera traversée par le courant primaire.

On précise que ce limiteur de surtension auxiliaire 1144 n'est pas indispensable au fonctionnement du disjoncteur mécatronique, et que sa tension d'amorçage est choisie supérieure à celle du limiteur de surtension principal 12. Cependant, il est préférable d'en avoir un, car pour des dimensions importantes d'un appareillage électrique haute tension, il peut apparaitre des surtensions locales à haute fréquence même si la tension aux bornes du système est limitée par ailleurs, comme c'est le cas ici avec le limiteur de surtension principal 12.

On précise également ici que la résistance 1142 et l'inductance 1141 ne sont pas impératives: en effet, leurs valeurs dépendent des valeurs globales des constantes distribuées de la sous-branche d'armement 11.4, définies au moins par les résistances intrinsèques et inductances de fuite.

Enfin, en parallèle électrique des branches principale 10 et auxiliaire 11, est monté un limiteur de surtension principal 12. Ce limiteur de surtension est dimensionné pour la tension du réseau L dans lequel le disjoncteur mécatronique 1 est inséré et à l'énergie nécessaire à absorber et à dissiper lors de l'extinction du courant lors d'un défaut comme expliqué maintenant. Bien entendu, il est tenu compte de la coordination d'isolement.

On décrit donc le fonctionnement du dispositif disjoncteur mécatronique 1 en relation avec les figures 2A à 2H illustrant les différentes séquences avec les schémas électriques équivalents qui en résultent, dans le cas particulier de l'apparition d'un défaut, étant précisé que les mêmes séquences se succèdent dans le cas d'une ouverture résultant d'un ordre spécifique. En figure 3, les courbes représentatives des valeurs de courant dans les différentes sous-branches en fonction du temps sont montrées.

En régime permanent, c'est-à-dire en fonctionnement normal du réseau L, avant l'instant t1 en figure 3, tous les transistors IGBT 1010a de la branche principale sont à l'état passant (conducteur), tout le courant passe alors à travers ceux-ci (courant i₁₀ de la figure 2A).

En cas d'apparition d'un défaut sur le réseau L qui se traduit par une surintensité de courant (de droite vers la gauche en figure 2), à l'instant t1 en figure 3, alors on fait basculer, par l'intermédiaire du système de contrôle commande, les transistors IGBT 1010a de leur état passant à non passant. Il y a alors commutation du courant des transistors IGBT 1010a, vers leurs limiteurs de surtension 103a. Cette commutation est effectuée de façon progressive du fait la présence de limiteur de vitesse de croissance de tension 102a. Il se produit alors une élévation rapide de tension aux bornes des branches principale 10 et auxiliaire 11. De façon synchrone, on délivre de manière automatique une énergie de commande aux modules de commandes de gâchette des thyristors de puissance 111a, 112a et 113a. Cette énergie prélevée sur le réseau L, permettra le moment venu la mise en conduction des thyristors de puissance 111a, 112a. Toujours de façon synchrone, et à un instant très légèrement supérieur à t2 en figure 3, le système de contrôle commande transmet, de préférence par fibre optique, à l'ensemble des modules de commande de gâchette des thyristors de puissance 111a, 112a et 113a une demande de signalisation d'état.

Si le système de contrôle commande reçoit en retour, toujours de préférence par fibre optique, la confirmation que l'ensemble des modules de commande de gâchette des thyristors de puissance 111a, 112a et 113a ont bien reçu un niveau d'énergie suffisant et qu'ils sont en état d'assurer leur fonction, alors il émet, toujours de préférence par fibre optique, l'ordre de mise en conduction des thyristors de puissance 111a, 112a et, simultanément, il transmet à l'interrupteur-sectionneur mécanique 100, toujours de préférence par fibre optique, l'ordre de s'ouvrir. Cette ouverture ne commencera à se produire qu'après un délai nettement supérieur à l'écart de temps t2-t1 en figure 3, compte tenu des inerties mécaniques de l'interrupteur-sectionneur mécanique 100. C'est pourquoi son ordre d'ouverture lui est donné de manière anticipée par le système de contrôle commande, afin de réduire le temps de fonctionnement global du disjoncteur mécatronique.

Si le système de contrôle commande, au delà d'un temps de latence spécifié, ne reçoit pas en retour la confirmation que l'ensemble des modules de commande de gâchette des thyristors de puissance 111a, 112a et 113a ont bien reçu un niveau d'énergie suffisant et qu'ils sont en état d'assurer leur fonction, il émet alors une télésignalisation de défaut et n'envoie dans ce cas aucun ordre de conduction, ni aux thyristors de puissance ni à l'interrupteur-sectionneur mécanique 100, et il exécute alors une stratégie de mise en sécurité du disjoncteur mécatronique 1.

Après cet instant t1, le courant est donc dévié de la branche principale 10 et passe donc dans les sous-branches de temporisation 11.1 et 11.2 (figure 2B). Pendant une période transitoire, c'est-à-dire jusqu'à l'instant t2 en figure 3, le courant passe d'une valeur nulle à la valeur du courant du réseau L. La déviation complète est assurée par les valeurs du système RLC constitué par l'inductance 1121, les résistances 1122 et 1125 et le condensateur 1120 déterminées d'une part pour avoir un régime transitoire oscillant entre la branche principale 10 et dans les branches de sous-temporisation concernées 11.1 et 11.2. Ce régime transitoire oscillant est une condition nécessaire d'une part à la commutation rapide du courant de la branche principale 10 vers les sous-branches de temporisation 11.1 et 11.2, et d'autre part pour limiter le di/dt du courant à un niveau inférieur à celui que peuvent accepter les thyristors de puissance 111a et 112a.

A l'instant t2 en figure 3, tout le courant a donc été dévié dans ces sous-branches 11.1 et 11.2 (figure 2C). Cette topologie subsiste, grâce au dimensionnement des composants électroniques des sous-branches de temporisation 11.1, 11.2, pendant une période de temps déterminée td nécessaire à l'actionnement pour ouvrir l'interrupteur-sectionneur mécanique 100 et pour lui permettre de tenir un premier niveau de tension aux bornes. De manière préférée, les inventeurs ont dimensionné une période de temps td très courte entre 200µs et 2000µs suffisante à un actionneur pour ouvrir suffisamment un interrupteur-sectionneur mécanique 100 constitué de deux ampoules à vide en série électrique, cet actionneur étant celui décrit et revendiqué dans la demande de brevet déposée ce jour au nom de la demanderesse et intitulée « *Actionneur électromagnétique à aimants permanents et interrupteur-sectionneur mécanique actionné par un tel actionneur* »*.*

Le limiteur de surtension 103a et le limiteur de surtension auxiliaire 1124 sont respectivement dimensionnés pour que, lorsque le courant primaire est bien établi dans les sous-branches de temporisation 11.1 et 11.2, c'est-à-dire au bout d'un temps légèrement supérieur à t2 mais bien inférieur à t3 en figure 3, l'amplitude du courant résiduel dans la branche principale 10 soit sensiblement nulle, typiquement nettement inférieure à 1 Ampère, de façon à permettre aux ampoules à vide de l'interrupteur-sectionneur mécanique 100 de s'ouvrir sans érosion électrique significative, du fait de la quasi absence d'arc électrique.

A l'instant t3 égal à t2 augmenté de la période td, en figure 3, on fait basculer, par l'intermédiaire au système de contrôle commande, les thyristors de puissance 113a de la troisième sous-branche de temporisation 11.3 de leur état non passant à leur état passant. Le courant est alors dévié dans cette sous-branche (figure 2D). Le courant i₂ dans cette sous-branche 11.3 va alors passer d'une valeur nulle à la valeur du courant de la ligne L dans cette sous-branche (figure 2E) à l'instant t4 de la figure 3. La déviation complète du courant est assurée par les valeurs du système RLC constitué par l'inductance 1131, les résistances 1132 et 1135 et le condensateur 1130 déterminés pour avoir un régime oscillant entre la sous-branche de temporisation 11.2 et cette sous-branche de sous-temporisation concernée 11.3. Ce régime transitoire oscillant est une condition nécessaire d'une part à la commutation rapide du courant de la sous-branche de temporisation 11.2 vers les sous-branches de temporisation 11.3, et d'autre part pour limiter le di/dt du courant à un niveau inférieur à celui que peuvent accepter les thyristors de puissance 113a. A cet instant t₄, les thyristors de puissance 112a se bloquent d'eux-mêmes (basculement à l'état non passant), du fait de la contre-polarisation transitoire effectuée par le condensateur 1120, et il n'y a plus de courant dans la sous-branche 11.2.

Cette contre-polarisation étant de courte durée, les thyristors de puissance 112a sont adaptés pour avoir un temps de blocage très court et être capables de supporter leur pleine tension de rétablissement directe en un temps compris entre quelques microsecondes et quelques dizaines de microsecondes. La même remarque s'applique, et pour les mêmes raisons, aux thyristors de puissance 111a et 113a.

Pendant cette durée comprise entre les temps t4 et t5 en figure 3, la tension aux bornes de la branche auxiliaire 11 va augmenter de la valeur initiale définie par le limiteur de surtension auxiliaire 1124 à une valeur essentiellement définie par limiteur de surtension auxiliaire 1134 et sa résistance associée 1136, lorsqu'elle est présente.

Selon les niveaux de tension du réseau L dans lequel le disjoncteur mécatronique selon l'invention 1 est implanté, le rapport entre ces tensions finales et initiales peut varier typiquement de 5 à 20.

Pour qu'une telle élévation de tension aux bornes de la branche auxiliaire 11 soit possible, l'instant t3 en figure 5 est déterminé de façon à ce que l'ouverture de l'interrupteur-sectionneur mécanique 100 soit suffisante pour lui permettre de résister à cette tension.

Une telle élévation de tension aux bornes de la branche auxiliaire 11 est nécessaire d'une part pour faciliter la commutation future du courant vers la branche d'armement 11.4, dont les grandes dimensions, en très haute tension, impliquent des inductances de fuite élevées et donc requièrent des tensions de commutation importantes, compte tenu de la valeur élevée que peut atteinte le courant de défaut primaire, lorsque sa vitesse de croissance atteint ou dépasse typiquement les 10 Ampères par microseconde.

Elle est nécessaire d'autre part pour délivrer de manière automatique une énergie suffisante aux modules de commandes de gâchette des thyristors de puissance 114a de la branche d'armement 11.4. Cette énergie prélevée sur le réseau L, permettra le moment venu la mise en conduction des thyristors de puissance 114a.

A un instant très légèrement inférieur à t5 en figure 3, le système de contrôle commande transmet, de préférence par fibre optique, à l'ensemble des modules de commande de gâchette des thyristors de puissance 114a une demande de signalisation d'état.

Si le système de contrôle commande reçoit en retour, de préférence toujours par fibre optique, la confirmation que l'ensemble des modules de commande de gâchette des thyristors de puissance 114a a bien reçu un niveau d'énergie suffisant et qu'ils sont en état d'assurer leur fonction, alors il émet, à l'instant t5 en figure 3, et de préférence toujours par fibre optique, l'ordre de mise en conduction des thyristors de puissance 114a.

Si le système de contrôle commande, au delà d'un temps de latence spécifié, ne reçoit pas en retour la confirmation que l'ensemble des modules de commande de gâchette des thyristors de puissance 114a a bien reçu un niveau d'énergie suffisant et qu'ils sont en état d'assurer leur fonction, il émet alors une télésignalisation de défaut et n'enverra pas d'ordre de conduction aux thyristors de puissance 114a et il exécute alors une stratégie de mise en sécurité du disjoncteur mécatronique.

Après l'instant t4, soit à l'instant t5 en figure 3, on fait basculer, par l'intermédiaire au système de contrôle commande, les thyristors de puissance 114a de la sous-branche d'armement 11.4 de leur état non passant à leur état passant résultant en la charge rapide du condensateur 1140. Le courant est alors dévié dans cette sous branche 11.4 (figure 2F). Le courant i₃ dans cette sous branche 11.4 va alors passer d'une valeur nulle à la valeur du courant de la ligne L dans cette sous-branche (figure 2G) à l'instant t6 de la figure 3. La déviation complète du courant est assurée par les valeurs du système RLC constitué par l'inductance 1141, les résistances 1142 et 1145 et le condensateur 1140 et celles du système RLC des sous-branches de temporisation 11.1, 11.3 déterminées pour avoir un régime transitoire oscillant entre ces dernières 11.1, 11.3 et cette sous-branche d'armement 11.4 concernée. Ce régime transitoire oscillant est une condition nécessaire d'une part à la commutation rapide du courant des sous-branches de temporisation 11.1, 11.3 vers la sous-branche d'armement 11.4, et d'autre part pour limiter le di/dt du courant à un niveau inférieur à celui que peuvent accepter les thyristors de puissance 114a. A cet instant t6, les thyristors de puissance 111a et 113a se bloquent d'eux-mêmes (basculement à l'état non passant) du fait de la contre-polarisation transitoire effectuée par le condensateur 1130, et il n'y a plus de courant dans leur sous-branche respective 11.1 et 11.3.

Cette contre-polarisation étant de courte durée, les thyristors de puissance 111a et 113a sont adaptés pour avoir un temps de blocage très court et être capables de supporter leur pleine tension de rétablissement directe en un temps compris entre quelques microsecondes et quelques dizaines de microsecondes.

A partir de cet instant t6, le condensateur 1140 de la sous-branche d'armement 11.4 continue sa charge jusqu'à atteindre la tension d'amorçage du limiteur de surtension principal 12. Alors, et sous l'effet de l'énergie réactive du réseau L, cette tension va continuer à augmenter faiblement selon une loi déterminée par la caractéristique du limiteur de surtension principal 12. Simultanément, le courant primaire est transféré de la sous-branche d'armement 11.4 vers le limiteur de surtension principal 12, qui va absorber l'énergie réactive du réseau L.

Cette insertion en série dans le réseau L d'un élément absorbeur d'énergie 12 et de haute tension va induire une décroissance du courant primaire d'autant plus rapide que la tension d'amorçage du limiteur de surtension principal 12 est grande devant la tension nominale du réseau L. Typiquement, le rapport entre la tension d'amorçage du limiteur de surtension principal 12 et la tension nominale du réseau L peut être choisie entre 1 et 4, par exemple 2, selon la tension nominale du réseau L.

A un instant t6 en figure 3, l'énergie réactive du réseau L n'est plus suffisante pour entretenir le haut niveau de surtension imposé par le limiteur de surtension principal 12, et la tension aux bornes de ce dernier va diminuer rapidement. Dans le même temps, la tension aux bornes du condensateur 1140, qui aura atteint un maximum proche de celui du limiteur de surtension principal 12, va diminuer plus lentement, à un rythme imposé par sa résistance de décharge 1145, laquelle est précisément dimensionnée pour que ces deux vitesses de décroissance soient nettement différentes. Il en résulte qu'à un moment donné, la tension aux bornes du condensateur 1140 va être supérieure à celle présente aux bornes du limiteur de surtension principal 12. Le condensateur 1140 va ainsi effectuer une contre-polarisation transitoire des thyristors 114a.

On rappellera ici que le limiteur de surtension auxiliaire 1144, ayant une tension d'amorçage supérieure à celle du limiteur de surtension principal 12, ne joue aucun rôle dans la séquence qui vient d'être décrite.

A l'instant t7 de la figure 3, les thyristors de puissance 114a se bloquent d'eux-mêmes (basculement à l'état non passant) du fait de la contre-polarisation transitoire effectuée par le condensateur 1140, et il n'y a plus de courant dans la sous-branche d'armement 11.4.

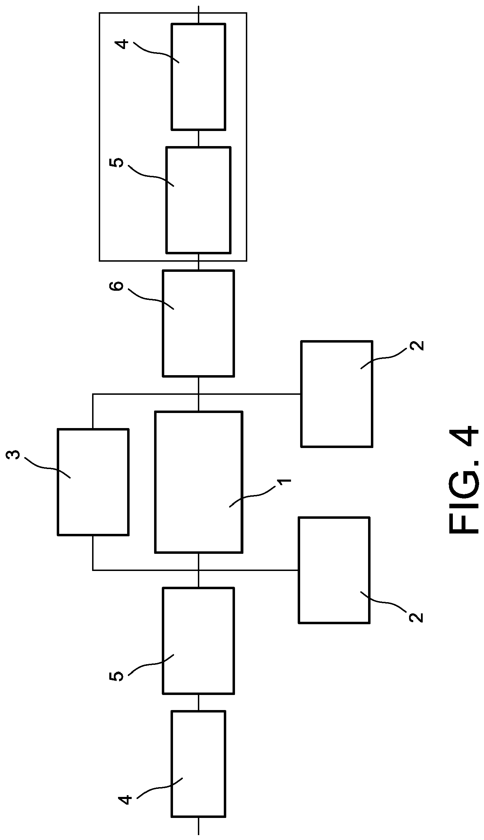

Au delà de cet instant t7 de la figure 3, plus aucun courant ne circule ni dans la branche principale 10 ni dans la branche auxiliaire 11, en dehors des courants de fuite résiduels dus aux imperfections des composants, et présents sur tout appareillage inséré en série dans un réseau à haute tension. Ces courants seront éliminés si nécessaire par des moyens d'isolement conventionnels placés en série électrique avec le disjoncteur mécatronique, comme précisé ci-après en relation avec la **figure 4****.** Le courant primaire est alors entièrement dévié dans le limiteur de surtension principal 12, et le schéma équivalent du système est celui de la figure 2H. Au bout d'une durée d'autant plus courte que le rapport entre la tension d'amorçage du limiteur principal 12 et la tension nominale du réseau sera élevé, le courant primaire est réduit aux courants de fuite du disjoncteur mécatronique: la coupure est effective (figure 2H).

Le condensateur 1140 quant à lui chargé initialement à un niveau de tension élevé, se décharge dans sa résistance de décharge 1145.

En figure 4, on a représenté un ensemble d'appareillage électrique intégré dans un réseau de transport d'électricité haute tension à courant continu de grande puissance et comprenant un disjoncteur mécatronique 1 qui vient d'être décrit.

Les appareillages électriques supplémentaires 2, 3, 4, 5 complètent les performances du disjoncteur 1 par des fonctions auxiliaires adaptées pour respectivement:
- permettre sa maintenance en toute sécurité;
- accroitre sa sureté de fonctionnement, en ne le soumettant pas à des contraintes électriques lorsque qu'il a réalisé une coupure de courant;
- limiter les courants d'enclenchement;
- permettre la coupure de petits courants;
- autoriser, sur ordre, le passage de courants supérieurs à son pouvoir de coupure.

Ainsi, il est prévu tout d'abord de part et d'autre des bornes du disjoncteur un appareillage de mise à la terre 2 qui dans sa position de fermeture permet la mise à la terre des bornes de connexion de la branche principale 10 et de la branche auxiliaire 11, en vue d'opérations de maintenance. En fonctionnement normal, l'appareillage de mise à la terre 2 est bien évidemment ouvert et doit permettre la tenue diélectrique entre bornes et terre.

Il est également prévu un appareillage de pontage 3 monté en parallèle électrique aux bornes du disjoncteur mécatronique et adapté pour faire transiter sur commande et pendant un temps déterminé, d'une borne à l'autre du disjoncteur mécatronique 1 et sans passer par ce dernier, un courant transitoire supérieur au pouvoir de coupure du disjoncteur mécatronique 1.

Un appareillage de sectionnement 4 est monté en série électrique avec le disjoncteur mécatronique 1 et à l'extérieur des bornes de connexions électriques des appareillages de mise à la terre 2. Il est destiné à permettre la tenue diélectrique entre bornes et entre bornes et terre, dans sa position d'ouverture. Dans sa position fermée, il permet la continuité électrique de la branche principale 10. Associé à un appareillage de mise à la terre 2, il permet ainsi la mise en sécurité du disjoncteur mécatronique 1 en vue de sa maintenance. Ainsi, toute intervention humaine sur le disjoncteur hybride 1 nécessite l'ouverture des appareillages de sectionnement 4 et la mise à la terre.

Un appareillage d'insertion de résistance 5 est monté en sérié électrique entre chaque appareillage de sectionnement 4 et le disjoncteur mécatronique 1 : cet appareillage 5 est destiné à limiter le courant d'enclenchement lors de la fermeture s'il y a une différence de potentiel aux bornes à l'instant de la fermeture.

Enfin, il est prévu un disjoncteur supplémentaire 6 en série électrique avec le disjoncteur mécatronique selon l'invention 1 est destiné à réaliser la coupure des petits courants. Selon les applications courant alternatif ou courant continu, la technologie utilisée pour réaliser un tel disjoncteur supplémentaire est différente. Dans des applications en en courant continu, le disjoncteur 6 peut être réalisé selon une technologie comparable à celle des disjoncteurs dits M.R.T.B (acronyme anglais de « Metal Return Transfer Breaker ») ou autrement dit en français, de type « disjoncteur de transfert pour retour métallique ». Ces disjoncteurs sont actuellement utilisés dans des stations de conversion AC/DC et DC/AC à très haute tension. Dans des applications en courant alternatif, le disjoncteur 6 peut être réalisé selon une technologie comparable à celle des disjoncteurs à courant alternatif utilisés dans les stations à très haute tension. Il peut ainsi s'agir d'un disjoncteur à soufflage d'arc par gaz isolant, tel que du SF6.

En **figure 5****,** on a représenté un mode de réalisation d'une branche principale 10 d'un disjoncteur mécatronique selon l'invention. La branche 10 comprend un seul module principal 10.1 constitué d'une pluralité de sous-branches 10.11, 10.12, 10.1n en parallèle électrique les unes avec les autres et identiques entre elles. Le nombre de modules principaux est à prévoir en fonction du courant primaire transitant dans le réseau L. Typiquement, les inventeurs mettent en oeuvre un dispositif disjoncteur mécatronique 1 avec un module parallèle 10.1 comportant un nombre égal à douze sous-branches en parallèle 10.11, 10.12, 10.1n afin de faire transiter un courant permanent de 1500 A. La mise en parallèle de deux ou trois de tels modules principaux 10.1 permet de transiter respectivement 3000 ou 4500 A permanents.

Chaque sous-branche comprend une pluralité d'interrupteur-sectionneurs mécanique 100 en série électrique les uns avec les autres et deux cellules de coupure 101a, 101b identiques également en série électrique avec les interrupteurs 100 mais montées tête-bêche l'une avec l'autre de façon à dédier chacune d'entre elles à un sens du courant. Un tel montage parallèle entre la pluralité de sous-branches 10.11, 10.12, 10.1n présente plusieurs avantages importants.

Les cellules de coupure 101a, 101b situées d'un même côté d'une sous-branche 10.11, 10.12 peuvent être regroupées en une seule entité physique pour constituer un sous module M4.1, M4.2 d'aide à la commutation électronique, comme illustré en pointillés en figure 5A.

Chacun des deux sous modules M4.1, M4.2 d'aide à la commutation électronique rassemble alors en un seul conducteur les courants des différentes sous-branches parallèles.

Chacun des deux sous modules M4.1, M4.2 d'aide à la commutation électronique peut assurer l'équilibrage des courants de chacune des sous-branches parallèles selon la méthode décrite précédemment, la proximité des cellules de coupure, réunies dans une seule entité, facilitant la télémesure et la comparaison de ces courants.

Chacun des sous modules M4.1, M4.2 d'aide à la commutation électronique étant susceptible de n'être sollicité pour une manoeuvre que de façon très ponctuelle, il peut être prévu des moyens de stockage de l'énergie nécessaire à l'activation ou la désactivation rapides de ses cellules de coupure. Par ailleurs, les équipements embarqués dans les sous modules M4.1, M4.2 d'aide à la commutation électronique sont conçus à partir de composants électroniques à faible consommation, minimisant ainsi la puissance électrique nécessaire à son fonctionnement en l'absence de sollicitations. Cela rend possible avantageusement leur alimentation en énergie via la transmission d'ondes électromagnétiques depuis un équipement situé au sol, et non soumis à la haute tension, la liaison étant alors réalisée soit via des guides d'onde, soit en faisceau libre. Ces ondes peuvent être soit des ondes dites millimétriques, dans le cas d'ondes hyperfréquences, soit lumineuses dans le spectre infrarouge, dans une fenêtre de longueur d'onde comprise entre 750nm et 1600nm. De préférence, on guide ces ondes par des fibres optiques en silice dopées et enveloppées dans des gaines isolantes.

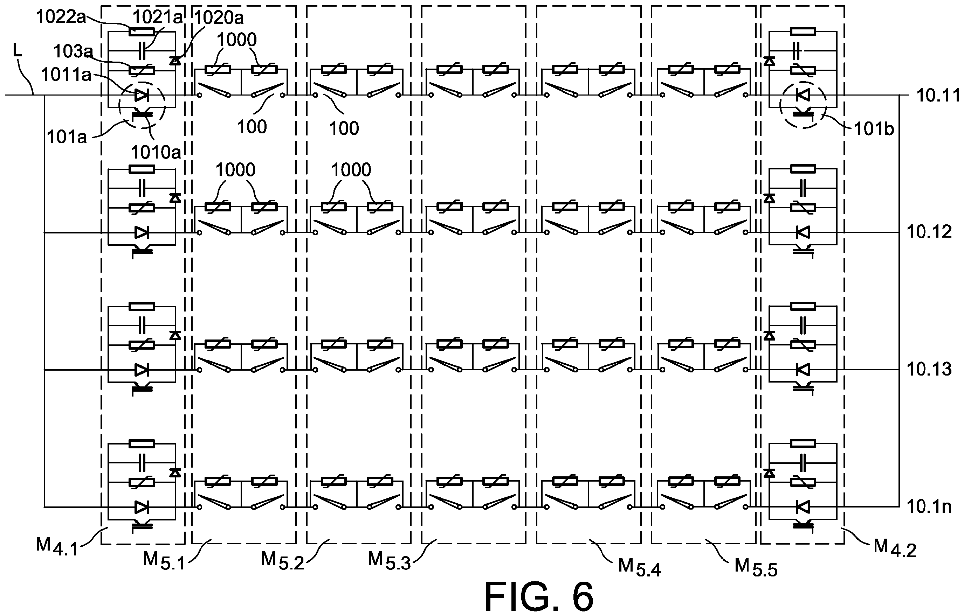

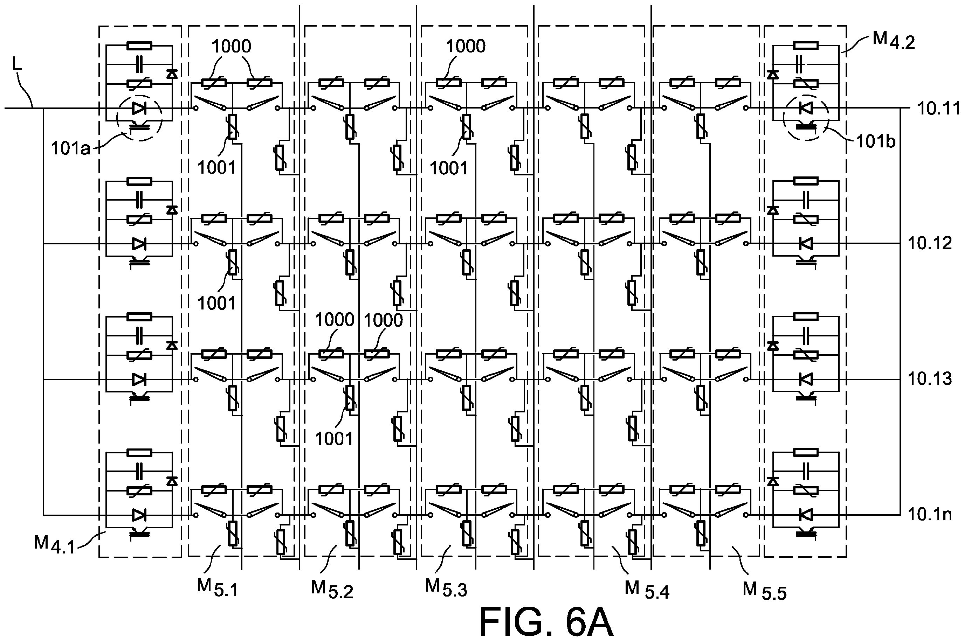

De façon similaire, les interrupteur-sectionneurs mécanique 100 des différentes sous-branches peuvent être regroupés en modules M5.1, M5.2, M5.3, M5.4, M5.5 comme symbolisé en pointillées par les figures 5A, 6 et 6A. Ces regroupements permettent de conférer avantageusement au disjoncteur mécatronique selon l'invention une structure modulaire, chaque module d'actionneur électromagnétique selon l'invention étant décrit et revendiqué dans la demande de brevet déposé le même jour que la présente demande et intitulée « *Actionneur à aimants permanents et interrupteur mécanique actionné par un tel actionneur* ». Ainsi, le disjoncteur mécatronique peut être utilisé à des niveaux de tensions plus ou moins élevés selon le nombre de modules en modules M5.1, M5.2, M5.3, M5.4, M5.5 d'interrupteur-sectionneurs mécanique 100 mis en série électrique.

La **figure 6** montre un mode de réalisation préféré des interrupteur-sectionneurs mécanique 100 constituée par une ampoule à vide (non représentée) et selon lequel chaque ampoule à vide est équipée en parallèle électrique d'un limiteur de surtension 1000 adapté pour répartir la tension de façon suffisamment homogène entre toutes les ampoules connectées en série dans une même sous-branches lorsque celles-ci sont en position ouverte, et/ou pour limiter les tensions maximales subies par chacune des ampoules. De préférence, le nombre total d'ampoules en série dans une même sous branche est surdimensionné par rapport aux besoins de façon à ce que la défaillance d'une ou de deux ampoules, c'est-à-dire leur incapacité à tenir la tension en position ouverte, soit sans conséquence sur le fonctionnement du disjoncteur mécatronique selon l'invention. Autrement dit, il s'agit ici d'une fonction de coordination qui a pour but de prendre aussi en compte les risques de non tenue en tension d'une ou de plusieurs ampoules à vide. Les systèmes non linéaires que sont les limiteurs de surtension 1000 peuvent être remplacés individuellement par une résistance de valeur importante, de telle manière à ne laisser passer par exemple qu'un courant résiduel négligeable de l'ordre de quelques mA. Il peut aussi d'agir d'une capacité ou d'une combinaison entre limiteur de surtension 1000, résistance de grande valeur et le cas échéant une capacité.

La figure 6A montre une variante avantageuse de ce mode préférentiel qui vient d'être décrit. Selon cette variante les points milieux de deux ampoules 100 de chaque sous branches d'un même module interrupteur-sectionneurs mécanique M5.1, M5.2, M5.3, M5.4, M5.5 sont reliés à un point commun de ce module par l'intermédiaire d'une résistance, linéaire ou non linéaire 1001, adaptée pour limiter les écarts de potentiel électrique entre ces points milieux d'un même module interrupteur-sectionneurs mécanique.

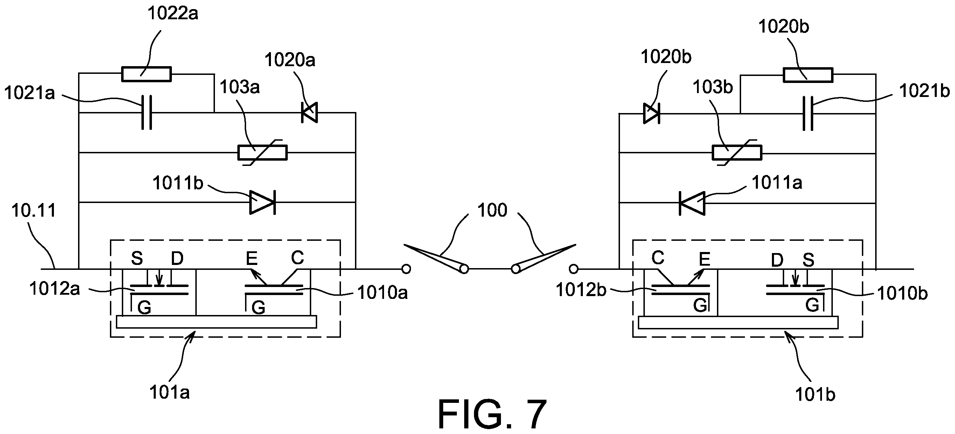

La **figure 7** montre une variante avantageuse de réalisation des cellules de coupure 101a, 101b et leur intégration dans une sous-branche 10.11 d'une branche principale 10 selon l'invention. Dans cette variante, l'élément semi-conducteur de puissance à taux de conduction contrôlée d'une cellule de coupure 101a, 101b est constitué d'au moins un transistor à effet de champ 1012a, 1012b et d'un transistor bipolaire à porte isolée (IGBT) 1010a, 1010b en série électrique avec le transistor à effet de champ. Ainsi, il y a une connexion du drain D du transistor à effet de champ 1012a, 1012b avec l'émetteur E du transistor IGBT 1010a, 101b tandis que leurs grilles G sont connectées à un circuit de commande assurant à l'ensemble un comportement en commutation similaire à celui du circuit usuellement connu sous l'appellation de montage cascode. Outre, l'avantage de neutraliser l'effet Miller du à la capacité parasite collecteur - grille de l'IGBT, un tel montage cascode présente, dans le cadre de l'invention, l'avantage de fiabiliser le circuit de commande en ne le soumettant pas aux effets des perturbations parasites à haute fréquence pouvant être injectées sur la branche principale par le réseau primaire.

De nombreuses améliorations peuvent être prévues sans pour autant sortir du cadre de l'invention.

Ainsi, comme déjà expliqué ci-dessus, l'architecture selon l'invention représentée en figure 2 est prévue pour couper un courant qui peut venir dans un sens ou dans le sens opposé à travers la ligne haute tension L. Dans une application où le courant à couper reste toujours orienté dans le même sens, l'architecture peut être simplifiée en supprimant toues les composants électroniques dupliqués en figure 2, c'est-à-dire tous ceux désignés avec le même indice a ou b.

## Revendications

1. Dispositif disjoncteur mécatronique (1) destiné à couper un courant électrique circulant à travers un moyen de transmission de l'énergie électrique (L) comportant :
- une branche principale (10) comprenant au moins un module principal (10.1, 10.2, 10.n) comprenant au moins une sous-branche (10.11, 10.12, 10.1n) comprenant au moins un interrupteur-sectionneur mécanique (100) monté en série avec au moins une cellule de coupure (101a ; 101b) constituée d'au moins un élément semi-conducteur de puissance à taux de conduction contrôlée (1010a ; 1010b);
- une branche auxiliaire (11) montée en parallèle électrique de la branche principale et comprenant:
• au moins une première sous-branche (11.1, 11.2, 11.3), dite sous-branche de temporisation, et comprenant au moins une première cellule de coupure constituée d'une pluralité de thyristors de puissance mis en cascade (111a, 112a, 113a ; 111b, 112b, 113b), au moins une des sous-branches de temporisation comprenant en outre au moins un premier module (M1) d'aide à la commutation avec au moins un premier condensateur (1120) en parallèle électrique avec sa résistance de décharge (1125) et un limiteur de surtension (1124);
• une deuxième sous-branche (11.4), dite sous-branche d'armement, montée en parallèle électrique de la sous-branche de temporisation et comprenant au moins une deuxième cellule de coupure constituée d'une pluralité de thyristors de puissance mis en cascade (114a; 114b) et au moins un deuxième module (M3) d'aide à la commutation avec au moins un deuxième condensateur (1140) en parallèle électrique avec sa résistance de décharge (1145);
- au moins un limiteur de surtension principal (12) en parallèle électrique de la branche principale.

2. Disjoncteur mécatronique selon la revendication 1, dans lequel chaque sous-branche d'un module principal comprend au moins un interrupteur-sectionneur mécanique (100) monté en série entre deux cellules de coupure (101a, 101b) à semi-conducteur de puissance; chaque cellule de coupure étant en anti-série l'une avec l'autre.

3. Disjoncteur mécatronique selon la revendication 1 ou 2, comprenant en outre un limiteur de vitesse de croissance de tension (102a, 102b), en parallèle électrique de chaque cellule de coupure d'un module principal; le limiteur de vitesse de croissance étant constitué d'une diode (1020a, 1020b) en série électrique avec un condensateur (1021a, 1021b) lui-même en parallèle électrique avec sa résistance de décharge (1022a, 1022b).

4. Disjoncteur mécatronique selon l'une des revendications précédentes, comprenant en outre un limiteur de surtension (103a) en parallèle électrique de chaque cellule de coupure d'un module principal.

5. Disjoncteur mécatronique selon l'une des revendications précédentes, dans lequel chaque cellule de coupure d'une sous-branche d'un module principal est constituée d'au moins un élément semi-conducteur de puissance à taux de conduction contrôlée (1010a, 1010b) et dans lequel chaque sous-branche d'un module principal comprend une diode (1011b, 1011a) en antiparallèle d'une cellule de coupure.

6. Disjoncteur mécatronique selon l'une des revendications précédentes, dans lequel l'élément semi-conducteur de puissance à taux de conduction contrôlée d'une cellule de coupure d'un module principal est un transistor bipolaire à porte isolée (IGBT) (1010a, 1010b).

7. Disjoncteur mécatronique selon l'une des revendications 1 à 5, dans lequel l'élément semi-conducteur de puissance à taux de conduction contrôlée d'une cellule de coupure (101a, 101b) d'une sous-branche (10.11, 10.12, 10.1n) d'un module principal (10.1, 10.2, 10.n) est constitué d'au moins un transistor à effet de champ (1012a, 1012b) et d'un transistor bipolaire à porte isolée (IGBT) (1010a, 1010b) en série électrique avec le transistor à effet de champ par connexion du drain du transistor à effet de champ avec l'émetteur du transistor IGBT, leurs grilles G étant connectées à un circuit de commande assurant à l'ensemble un comportement en commutation de type montage cascode.

8. Disjoncteur mécatronique selon l'une des revendications précédentes, dans lequel la branche principale comprend plusieurs modules principaux (10.1, 10.2, ...10.n) en parallèle électrique les uns avec les autres.

9. Disjoncteur mécatronique selon l'une des revendications précédentes, dans lequel chaque module principal (10.1, 10.2, ...10.n) comporte plusieurs sous-branches (10.11, 10.12, ...10.1n) en parallèle électrique les unes avec les autres.

10. Disjoncteur mécatronique selon l'une des revendications précédentes, dans lequel la branche auxiliaire (11) comprend au moins deux sous-branches de temporisation (11.2, 11.3) en parallèle électrique l'une de l'autre, la deuxième sous-branche de temporisation comprenant au moins une troisième cellule de coupure constituée d'une pluralité de thyristors de puissance mis en cascade (111a, 113a; 111b, 113b) et au moins un troisième module (M2) d'aide à la commutation avec au moins un troisième condensateur (1130), au moins une troisième inductance (1131) et au moins une troisième résistance (1132, 1136) en série électrique avec le troisième condensateur lui-même en parallèle électrique avec sa résistance de décharge (1135) et un limiteur de surtension (1134)lui-même en série avec une résistance (1136).

11. Disjoncteur mécatronique selon l'une des revendications précédentes, dans lequel chaque interrupteur-sectionneur mécanique (100) de chaque sous-branche (10.11, 10.12, ...10.1n) de chaque module principal (10.1, 10.2,... 10.n) est constitué de deux ampoules à vide en série électrique.

12. Ensemble d'appareillages électrique destiné à être implanté dans un moyen de transmission de l'énergie électrique haute tension, en courant alternatif ou en courant continu, comprenant un disjoncteur mécatronique selon l'une des revendications précédentes et aux bornes duquel sont connectés en série de part et d'autre au moins un appareillage électrique de mise à la terre (2).

13. Ensemble d'appareillages électrique selon la revendication 12, comprenant un appareillage de pontage (3) monté en parallèle électrique aux bornes du disjoncteur mécatronique et adapté pour faire transiter sur commande et pendant un temps déterminé un courant transitoire, supérieur au pouvoir du disjoncteur mécatronique, d'une borne à l'autre du disjoncteur sans passer par ce dernier.

14. Ensemble d'appareillages électrique selon la revendication 12 ou 13, comprenant de part et d'autre des bornes du disjoncteur hybride, un appareillage de sectionnement (4) monté en série électrique avec le disjoncteur mécatronique et à l'extérieur des bornes de connexions électriques des appareillages de mise à la terre.

15. Ensemble d'appareillages électrique selon la revendication 14, comprenant entre une borne de connexion électrique d'un appareillage de mise à la terre et un appareillage de sectionnement, un appareillage d'insertion de résistance électrique (5) en série électrique avec ce dernier.

16. Ensemble d'appareillages électrique selon l'une des revendications 12 à 15, comprenant un disjoncteur supplémentaire en série électrique avec le dispositif disjoncteur mécatronique, le disjoncteur supplémentaire étant adapté pour couper les faibles courants.

17. Ensemble d'appareillages électrique selon la revendication 16, dans lequel le disjoncteur supplémentaire est un disjoncteur de transfert pour retour métallique (M.R.T.B).

18. Ensemble d'appareillages électrique selon la revendication 16, dans lequel le disjoncteur supplémentaire est de type mécanique à soufflage d'arc.

19. Ensemble d'appareillages électrique selon l'une des revendications 12 à 18, dans lequel les appareillages et disjoncteur supplémentaire sont conçus sous forme modulaire seul ou associés à plusieurs.

20. Procédé de déclenchement d'un dispositif disjoncteur mécatronique selon l'une des revendications 1 à 11, selon lequel en présence uniquement d'un courant permanent dans la branche principale, et en l'absence d'ordre spécifique, on maintient chaque interrupteur-sectionneur en position fermée et l'(les) élément(s) semi-conducteur de puissance à taux de conduction contrôlée à l'état passant et l'ensemble des thyristors de puissance de la branche auxiliaire à l'état non-passant et selon lequel soit en cas d'une surintensité de courant dans la branche principale du dispositif, soit à la réception d'un ordre spécifique, il comporte les étapes suivantes:
a/ basculement de l'état passant à un état non passant de l' (des) élément(s) semi-conducteur de puissance à taux de conduction contrôlée tout en maintenant fermé chaque interrupteur-sectionneur de sorte à dévier la totalité du courant dans la au moins une sous-branche de temporisation pendant une durée nécessaire à l'ouverture de chaque interrupteur-sectionneur mécanique;
b/ de façon synchrone à l'étape a/ basculement de l'état non passant à un état passant des thyristors de puissance d'au moins une sous-branche de temporisation pour atteindre un niveau de tension aux bornes de la branche principale et de celle auxiliaire permettant à la fois de ne faire circuler aucun courant ni dans la branche principale, ni dans la branche d'armement et ni dans le limiteur de surtension, de permettre le basculement ultérieur de l'état non passant à un état passant des thyristors de puissance de la branche d'armement en position d'ouverture de chaque interrupteur-sectionneur mécanique et de permettre le basculement ultérieur de l'état passant à l'état non passant des thyristors de puissance de la au moins une sous branche de temporisation en position d'ouverture de chaque interrupteur-sectionneur mécanique;
c/ une fois l'étape b/ réalisée, ouverture de chaque interrupteur-sectionneur mécanique;
d/ une fois l'étape c/ réalisée et lorsque chaque interrupteur-sectionneur mécanique a atteint sa position d'ouverture, basculement de l'état non passant à un état passant des thyristors de puissance de la sous-branche d'armement pour atteindre un niveau de tension à ses bornes permettant de dévier la totalité du courant vers le(s) limiteur(s) de surtension;
e/ extinction du courant par le(s) limiteur(s) de surtension principal(ux).

21. Procédé de déclenchement selon la revendication 20, selon lequel on réalise en outre une étape f) d'élimination des éventuels courants de fuite résiduels par ouverture d'au moins un appareillage de sectionnement (4).

## Patentansprüche

1. Mechatronische Schutzschaltvorrichtung (1), die dazu bestimmt ist, einen elektrischen Strom abzuschalten, der durch eine Einrichtung zum Übertragen von elektrischer Energie (L) fließt, enthaltend:
- einen Hauptzweig (10) mit zumindest einem Hauptmodul (10.1, 10.2, 10.n), das zumindest einen Unterzweig (10.11, 10.12, 10.1n) aufweist, der zumindest einen mechanischen Trennschalter (100) enthält, der in Reihe mit zumindest einer Schaltzelle (101a; 101b) geschaltet ist, die aus zumindest einem Leistungshalbleiterelement mit kontrollierter Leitungsrate (1010a; 1010b) besteht;
- einen Nebenzweig (11), der elektrisch parallel zum Hauptzweig geschaltet ist und enthält:
• zumindest einen ersten Unterzweig (11.1, 11.2, 11.3), Verzögerungsunterzweig genannt, der zumindest eine erste Schaltzelle aufweist, die aus einer Mehrzahl von in Kaskade geschalteten Leistungsthyristoren (111a, 112a, 113a; 111b, 112b, 113b) besteht, wobei zumindest einer der Verzögerungsunterzweige ferner zumindest ein erstes Schaltunterstützungsmodul (M1) mit zumindest einem ersten Kondensator (1120), zumindest eine erste Induktivität (1121) und zumindest einen ersten Widerstand (1122) elektrisch in Reihe mit dem ersten Kondensator aufweist, der seinerseits elektrisch parallel zu seinem Entladewiderstand (1125) und einem Überspannungsableiter (1124) geschaltet ist;
• einen zweiten Unterzweig (11.4), Aktivierungsunterzweig genannt, der elektrisch parallel zum Verzögerungsunterzweig geschaltet ist und zumindest eine zweite Schaltzelle aufweist, die aus einer Mehrzahl von in Kaskade geschalteten Leistungsthyristoren (114a; 114b) besteht, sowie zumindest ein zweites Schaltunterstützungsmodul (M3) mit zumindest einem zweiten Kondensator (1140), zumindest eine zweite Induktivität (1141) und zumindest einen zweiten Widerstand (1142) elektrisch in Reihe mit dem zweiten Kondensator, der seinerseits elektrisch parallel zu seinem Entladewiderstand (1145) und einem Überspannungsableiter (1144) geschaltet ist;
- und zumindest einen Hauptüberspannungsableiter (12), der elektrisch parallel zum Hauptzweig geschaltet ist.

2. Mechantronischer Schutzschalter nach Anspruch 1, wobei jeder Unterzweig eines Hauptmoduls zumindest einen mechanischen Tennschalter (100) aufweist, der zwischen zwei Schaltzellen (101 a, 101b) mit Leistungshalbleiter in Reihe geschaltet ist; wobei jede Schaltzelle antiseriell zueinander geschaltet ist.

3. Mechantronischer Schutzschalter nach Anspruch 1 oder 2, ferner enthaltend einen Spannungsaufbaugeschwindigkeitsbegrenzer (102a, 102b), der elektrisch parallel zu jeder Schaltzelle eines Hauptmoduls geschaltet ist, wobei der Aufbaugeschwindigkeitsbegrenzer aus einer Diode (1020a, 1020b) elektrisch in Reihe mit einem Kondensator (1021 a, 1021b) besteht, der seinerseits elektrisch parallel zu seinem Entladewiderstand (1022a, 1022b) geschaltet ist.

4. Mechantronischer Schutzschalter nach einem der vorangehenden Ansprüche, ferner enthaltend einen Überspannungsableiter (103a), der elektrisch parallel zu jeder Schaltzelle eines Hauptmoduls geschaltet ist.

5. Mechantronischer Schutzschalter nach einem der vorangehenden Ansprüche, wobei jede Schaltzelle eines Unterzweigs eines Hauptmoduls aus zumindest einem Leistungshalbleiterelement mit kontrollierter Leitungsrate (1010a, 1010b) besteht, und wobei jeder Unterzweig eines Hauptmoduls eine Diode (1011 b, 1011 a) enthält, die antiparallel zu einer Schaltzelle geschaltet ist.

6. Mechantronischer Schutzschalter nach einem der vorangehenden Ansprüche, wobei das Leistungshalbleiterelement mit kontrollierter Leitungsrate einer Schaltzelle eines Hauptmoduls ein Bipolartransistor mit isoliertem Gate (IGBT) (1010a, 1010b) ist.

7. Mechantronischer Schutzschalter nach einem der Ansprüche 1 bis 5, wobei das Leistungshalbleiterelement mit kontrollierter Leitungsrate einer Schaltzelle (101a, 101b) eines Unterzweigs (10.11, 10.12, 10.1n) eines Hauptmoduls (10.1, 01.2, 10.n) aus zumindest einem Feldeffekttransistor (1012a, 1012b) und aus einem Bipolartransistor mit isoliertem Gate (IGBT) (1010a, 1010b) elektrisch in Reihe mit dem Feldeffekttransistor durch Verbindung des Drains des Feldeffekttransistors mit dem Emitter des IGBT-Transistors besteht, wobei deren Gates G mit einem Steuerkreis verbunden sind, der für die Anordnung ein Schaltverhalten vom Typ Kaskadenschaltung sicherstellt.

8. Mechantronischer Schutzschalter nach einem der vorangehenden Ansprüche, wobei der Hauptzweig mehrere Hauptmodule (10.1, 10.2, ... 10.n) aufweist, die elektrisch parallel zueinander geschaltet sind.

9. Mechantronischer Schutzschalter nach einem der vorangehenden Ansprüche, wobei jedes Hauptmodul (10.1, 10.2, ... 10.n) mehrere Unterzweige (10.11, 10.12, ... 10.1 n) aufweist, die elektrisch parallel zueinander geschaltet sind.

10. Mechantronischer Schutzschalter nach einem der vorangehenden Ansprüche, wobei der Nebenzweig (11) zumindest zwei Verzögerungsunterzweige (11.2, 11.3) aufweist, die elektrisch parallel zueinander geschaltet sind, wobei der zweite Verzögerungsunterzweig zumindest eine dritte Schaltzelle aufweist, die aus einer Mehrzahl von in Kaskade geschalteten Leistungsthyristoren (111 a, 113a; 111 b, 113b) besteht, sowie zumindest ein drittes Schaltunterstützungsmodul (M2) mit zumindest einem dritten Kondensator (1130), zumindest eine dritte Induktivität (1131) und zumindest einen dritten Widerstand (1132, 1136), die elektrisch in Reihe mit dem dritten Kondensator geschaltet sind, der seinerseits elektrisch parallel mit seinem Entladewiderstand (1135) geschaltet ist, sowie einen Überspannungsableiter (1134), der seinerseits in Reihe mit einem Widerstand (1136) geschaltet ist.

11. Mechantronischer Schutzschalter nach einem der vorangehenden Ansprüche, wobei jeder mechanische Trennschalter (100) eines jeden Unterzweigs (10.11, 10.12, ... 10.1 n) eines jeden Hauptmoduls (10.1, 10.2, ... 10.n) aus zwei Vakuumröhren besteht, die elektrisch in Reihe geschaltet sind.

12. Anordnung von elektrischen Schaltgeräten, die dazu bestimmt ist, in eine Einrichtung zum Übertragen von elektrischer Energie unter Hochspannung in Wechselstrom bzw. Gleichstrom eingesetzt zu werden, enthaltend einen mechatronischen Schutzschalter nach einem der vorangehenden Ansprüche, an dessen Anschlussklemmen auf beiden Seiten jeweils zumindest ein elektrische Erdungseinrichtung (2) in Reihe angeschlossen ist.

13. Anordnung von elektrischen Schaltgeräten nach Anspruch 12, enthaltend eine Überbrückungseinrichtung (3), die elektrisch parallel zu den Anschlussklemmen des mechatronischen Schutzschalters geschaltet und dazu ausgelegt ist, auf Kommando und für eine bestimmte Zeit einen transienten Strom, der höher als die Kapazität des mechatronischen Schutzschalters ist, von einer Anschlussklemme des Schutzschalters zur anderen weiterzuleiten, ohne durch diesen hindurchzufließen.

14. Anordnung von elektrischen Schaltgeräten nach Anspruch 12 oder 13, enthaltend auf beiden Seiten der Anschlussklemmen des Hybridschutzschalters eine Trenneinrichtung (4), die elektrisch in Reihe mit dem mechatronischen Schutzschalter und außerhalb der Anschlussklemmen der elektrischen Anschlüsse der Erdungseinrichtungen geschaltet ist.

15. Anordnung von elektrischen Schaltgeräten nach Anspruch 14, enthaltend zwischen einer elektrischen Anschlussklemme einer Erdungseinrichtung und einer Trenneinrichtung eine elektrische Widerstandseinsetzeinrichtung (5), die elektrisch in Reihe mit letzterer geschaltet ist.

16. Anordnung von elektrischen Schaltgeräten nach einem der Ansprüche 12 bis 15, enthaltend einen zusätzlichen Schutzschalter, der elektrisch in Reihe mit der mechatronischen Schutzschaltvorrichtung geschaltet ist, wobei der zusätzliche Schutzschaler dazu geeignet ist, niedrige Ströme abzuschalten.

17. Anordnung von elektrischen Schaltgeräten nach Anspruch 16, wobei der zusätzliche Schutzschalter ein metallischer Rückführungs-Leistungsschalter (MRTB) ist.

18. Anordnung von elektrischen Schaltgeräten nach Anspruch 16, wobei der zusätzliche Schutzschalter vom mechanischen Typ mit Lichtbogenlöschung ist.

19. Anordnung von elektrischen Schaltgeräten nach einem der Ansprüche 12 bis 18, wobei die Schaltgeräte und der zusätzliche Schutzschalter in modularer Form allein oder zu mehreren zusammengefasst ausgeführt sind.

20. Verfahren zum Auslösen einer mechatronischen Schutzschaltvorrichtung nach einem der Ansprüche 1 bis 11, wobei bei Vorhandensein nur von einem Dauerstrom in dem Hauptzweig und bei Ausbleiben eines spezifischen Kommandos jeder Trennschalter in Schließstellung gehalten wird und das bzw. die Leistungshalbleiterelemente(e) mit kontrollierter Leitungsrate im leitenden Zustand gehalten wird/werden und die Anordnung von Leistungsthyristoren des Nebenzweigs im nichtleitenden Zustand gehalten werden, und wobei je nachdem entweder bei einem Überstrom im Hauptzweig der Vorrichtung oder bei Erhalt eines spezifischen Kommandos, es die nachfolgenden Schritte umfasst:
a/ Umschalten des bzw. der Leistungshalbleiterelemente mit kontrollierter Leitungsrate vom leitenden Zustand in einen nichtleitenden Zustand unter Geschlossenhalten eines jeden Trennschalters, so dass der gesamte Strom in dem zumindest einen Verzögerungsunterzweig für eine Zeit, die zum Öffnen eines jeden mechanischen Trennschalters erforderlich ist, abgeleitet wird;
b/ synchron zu Schritt a/ Umschalten der Leistungsthyristoren von zumindest einem Verzögerungsunterzweig vom nichtleitenden Zustand in einen leitenden Zustand, um ein Spannungsniveau an den Anschlussklemmen des Hauptzweigs und des Nebenzweigs zu erreichen, mit dem es zugleich möglich ist, weder im Hauptzweig noch im Aktivierungszweig noch im Überspannungsableiter Strom fließen zu lassen, so dass ein nachträgliches Umschalten der Leistungsthyristoren des Aktivierungszweigs vom nichtleitenden Zustand in einen leitenden Zustand in Offenstellung eines jeden mechanischen Trennschalters möglich ist und das nachträgliche Umschalten der Leistungsthyristoren des zumindest einen Verzögerungsunterzweigs vom leitenden Zustand in den nichtleitenden Zustand in Offenstellung eines jeden mechanischen Trennschalters möglich ist;
c/ nach erfolgtem Schritt b/ Öffnen eines jeden mechanischen Trennschalters;
d/ nach erfolgtem Schritt c/ und dann, wenn jeder mechanische Trennschalter seine Offenstellung erreicht hat, Umschalten der Leistungsthyristoren des Aktivierungsunterzweigs vom nichtleitenden Zustand in einen leitenden Zustand, um ein Spannungsniveau an seinen Anschlussklemmen zu erreichen, mit dem es möglich ist, den gesamten Strom zu dem/den Überspannungsableiter(n) abzuleiten:
e/ Löschen des Stroms durch den/die Hauptüberspannungsableiter.

21. Auslösungsverfahren nach Anspruch 20, wobei ferner ein Schritt f) des Beseitigens von eventuellen Restleckströmen durch Öffnen von zumindest einer Trenneinrichtung (4).

## Claims

1. A mechatronic circuit-breaker device (1) adapted to break an electrical current flowing through electrical power transmission means (L), the device comprising:
- a main branch (10) comprising at least one main module (10.1, 10.2, 10.n) comprising at least one sub-branch (10.11, 10.12, 10.1n) comprising at least one mechanical switch-disconnector (100) connected in series with at least one breaker cell (101a; 101b) constituted of at least one power semiconductor element with controlled conduction rate (1010a; 1010b);
- an auxiliary branch (11) electrically in parallel with the main branch and comprising:
• at least one first sub-branch (11.1, 11.2, 11.3), called the timing sub-branch, and comprising at least one first breaker cell comprising a plurality of power thyristors in cascade (111a, 112a, 113a; 111b, 112b, 113b), at least one of the timing sub-branches further comprising at least one first switching-assistance module (M1) with at least one first capacitor (1120), electrically in parallel with its discharge resistance (1125) and a voltage surge limiter (1124);
• a second sub-branch (11.4), called the arming sub-branch, electrically in parallel with the timing sub-branch and comprising at least one second breaker cell constituted of a plurality of power thyristors in cascade (114a; 114b) and at least one second switching-aid module (M3) with at least one second capacitor (1140) electrically in parallel with its discharge resistor (1145); and
- at least one main voltage surge limiter (12) electrically in parallel with the main branch.

2. A mechatronic circuit-breaker according to claim 1, wherein each sub-branch of a main module comprises at least one mechanical switch-disconnector (100) connected in series between two breaker cells (101a, 101b) connected in anti-series with each other and using power semiconductors.

3. A mechatronic circuit-breaker according to claim 1 or claim 2, further comprising a rate of voltage increase limiter (102a, 102b) electrically in parallel with each breaker cell of a main module, the rate of increase limiter comprising a diode (1020a, 1020b) electrically in series with a capacitor (1021a, 1021b) itself electrically in parallel with its discharge resistor (1022a, 1022b).

4. A mechatronic circuit-breaker according to any preceding claim, further comprising a voltage surge limiter (103a) electrically in parallel with each breaker cell of a main module.

5. A mechatronic circuit-breaker according to any preceding claim, wherein each breaker cell of a sub-branch of a main module comprises at least one power semiconductor element with controlled conduction rate (1010a, 1010b) and wherein each sub-branch of a main module comprises a diode (1011b, 1011a) connected in anti-parallel with a breaker cell.

6. A mechatronic circuit-breaker according to any preceding claim, wherein the power semiconductor element with controlled conduction rate of a breaker cell of a main module is an insulated gate bipolar transistor (IGBT) (1010a, 1010b).

7. A mechatronic circuit-breaker according to any one of claims 1 to 5, wherein the power semiconductor element with controlled conduction rate of a breaker cell (101a, 101b) of a sub-branch (10.11, 10.12, 10.1n) of a main module (10.1, 10.2, 10.n) comprises at least one field-effect transistor (1012a, 1012b) and an insulated gate bipolar transistor (IGBT) (1010a, 1010b) connected electrically in series with the field-effect transistor by connecting the drain of the field-effect transistor to the emitter of the IGBT transistor, their gates G being connected to a control circuit ensuring switching behavior of the cascode circuit type.

8. A mechatronic circuit-breaker according to any preceding claim, wherein the main branch comprises a plurality of main modules (10.1, 10.2, ..., 10.n) electrically in parallel with each other.

9. A mechatronic circuit-breaker according to any preceding claim, wherein each main module (10.1, 10.2, ..., 10.n) includes a plurality of sub-branches (10.11, 10.12, ..., 10.1n) electrically in parallel with each other.

10. A mechatronic circuit-breaker according to any preceding claim, wherein the auxiliary branch (11) comprises at least two timing sub-branches (11.2, 11.3) electrically in parallel with each other, the second timing sub-branch comprising at least one third breaker cell comprising a plurality of power thyristors (111a, 113a; 111b, 113b) in cascade and at least one third switching-aid module (M2) with at least one third capacitor (1130), at least one third inductor (1131), and at least one third resistor (1132, 1136) electrically in series with the third capacitor, itself electrically in parallel with its discharge resistor (1135) and a voltage surge limiter (1134) itself in series with a resistor (1136).

11. A mechatronic circuit-breaker according to any preceding claim, wherein each mechanical switch-disconnector (100) of each sub-branch (10.11, 10.12, ..., 10.1n) of each main module (10.1, 10.2, ..., 10.n) comprises two vacuum interrupters electrically in series.

12. A set of electrical switchgear intended to be installed in high-voltage alternating current or direct current electrical energy transmission means, comprising a mechatronic circuit-breaker according to any preceding claim and at least one electrical grounding switch (2) connected in series with each of the terminals of the mechatronic circuit-breaker.

13. A set of electrical switchgear according to claim 12, comprising a bridging switch (3) connected electrically in parallel to the terminals of the mechatronic circuit-breaker and adapted on command and for a particular time period to cause a transient current greater than the breaking capacity of the mechatronic circuit-breaker to flow from one terminal to the other of the circuit-breaker without passing therethrough.

14. A set of electrical switchgear according to claim 12 or claim 13, comprising on either side of the terminals of the hybrid circuit-breaker a disconnector (4) electrically in series with the mechatronic circuit-breaker and externally of the electrical connecting terminals of the grounding switches.

15. A set of electrical switchgear according to claim 14, comprising, between an electrical connecting terminal of a grounding switch and a disconnector, a switch for inserting an electrical resistor (5) in electrical series with said disconnector.

16. A set of electrical switchgear according to any one of claims 12 to 15, comprising an additional circuit-breaker electrically in series with the mechatronic circuit-breaker device, the additional circuit-breaker being adapted to break low currents.

17. A set of electrical switchgear according to claim 16, wherein the additional circuit-breaker is a metallic return transfer breaker (MRTB).

18. A set of electrical switchgear according to claim 16, wherein the additional circuit-breaker is of the mechanical arc-extinction type.

19. A set of electrical switchgear according to any one of claims 12 to 18, wherein the switchgear and additional circuit-breaker are of modular design individually or in combination.

20. A method triggering a mechatronic circuit-breaker device according to any one of claims 1 to 11, wherein only in the presence of a steady current in the main branch, and in the absence of a specific instruction, each switch-disconnector is maintained in the closed position and the power semiconductor element or elements with controlled conduction rate in the ON state and the set of power thyristors of the auxiliary branch in the OFF state, and wherein either in the event of a current surge in the main branch of the device or on reception of a specific instruction, it comprises the following steps:
a) switching from the ON state to an OFF state of the power semiconductor element or elements with controlled conduction rate whilst maintaining each switch-disconnector closed so as to divert all of the current into the at least one timing sub-branch for a time period necessary for each mechanical switch-disconnector to open;
b) synchronously with the step a), switching power thyristors of at least one timing sub-branch from the OFF state to an ON state to achieve a voltage level at the terminals of the main branch and of the auxiliary branch enabling current to flow neither in the main branch nor in the arming branch nor in the voltage surge limiter, to enable subsequent switching from the OFF state to an ON state of the power thyristors of the arming branch in the open position of each mechanical switch-disconnector, and allowing subsequent switching from the ON state to the OFF state of the power thyristors of the at least one timing sub-branch in the open position of each mechanical switch-disconnector;
c) when step b) has been completed, opening each mechanical switch-disconnector;
d) when step c) has been completed and when each mechanical switch-disconnector has reached its open position, switching the power thyristors of the arming sub-branch from the OFF state to an ON state to achieve a voltage level at its terminals enabling diversion of all of the current to the voltage surge limiter or limiters;
e) extinction of the current by the main voltage surge limiter or limiters.

21. A triggering method according to claim 20, wherein there is further executed a step f) of eliminating any residual leakage currents by opening at least one disconnector (4).
